# FASCICULE DE BREVET EUROPEEN

(11) **EP 3 780 632 B1**
(45) Date de publication et mention de la délivrance du brevet: **11.01.2023**
(21) Numéro de dépôt: 20184248.1
(22) Date de dépôt: 06.07.2020
(51) Int. Cl.: H04N 21/24, H04N 21/262, H04N 21/84, H04N 19/30, H04N 19/436

(54) **SYSTEME DE DISTRIBUTION D'UN CONTENU AUDIOVISUEL**
SYSTEM ZUR VERBREITUNG EINES AUDIOVISUELLEN INHALTS
SYSTEM FOR DISTRIBUTING AUDIOVISUAL CONTENT

(30) Priorité: 09.07.2019 FR 1907690
(43) Date de publication de la demande: 17.02.2021
(73) Titulaire: Quortex, 35510 Cesson Sevigne (FR)
(72) Inventeur: VIERON, Jérôme, 35510 CESSON SEVIGNE (FR); TROLEZ, Thierry, 35510 CESSON SEVIGNE (FR); BAILLAVOINE, Marc, 35510 CESSON SEVIGNE (FR); VILLERET, Julien, 35510 CESSON SEVIGNE (FR)
(74) Mandataire: Cabinet Le Guen Maillet

(56) Documents cités:
- US-A1- 2017 078 376
- DENEKE TEWODORS ET AL: "Video transcoding time prediction for proactive load balancing", 2014 IEEE INTERNATIONAL CONFERENCE ON MULTIMEDIA AND EXPO (ICME), IEEE, 14 juillet 2014 (2014-07-14), pages 1-6, XP032639085, DOI: 10.1109/ICME.2014.6890256
- SRIRAM SETHURAMAN ET AL: "Noniterative Content-Adaptive Distributed Encoding Through ML Techniques", SMPTE MOTION IMAGING JOURNAL, vol. 127, no. 9, 1 octobre 2018 (2018-10-01), pages 50-55, XP055675322, US ISSN: 1545-0279, DOI: 10.5594/JMI.2018.2862647

## Description

### DOMAINE TECHNIQUE

La présente invention concerne un système permettant de distribuer des contenus audiovisuels, et un procédé exécuté par ledit système.

### ETAT DE LA TECHNIQUE ANTERIEURE

Le monde de la distribution de la télévision est en pleine mutation. Alors que pendant longtemps chaque utilisateur se contentait d'une diffusion en direct des programmes audiovisuels sur son poste de télévision, les modes de consommation des programmes audiovisuels ont fondamentalement changé. Ainsi, un utilisateur veut maintenant pouvoir regarder n'importe où et n'importe quand un programme audiovisuel qu'il a choisi. Ces nouveaux modes de consommation ont été rendus possibles par une apparition de nouveaux terminaux toujours plus puissants et nomades et par une forte amélioration des infrastructures réseau.

En parallèle de cette évolution, un nouveau service de diffusion audiovisuel, appelé *OTT* (service par contournement, « Over-The-Top service» en terminologie anglo-saxonne) est apparu. Un service OTT est un service de distribution de contenus audiovisuels sur réseau dans lequel l'opérateur dudit réseau (*i.e.* une compagnie de câble, de téléphone ou de satellite) n'assure qu'un rôle de transporteur desdits contenus. Dans un service OTT, l'opérateur du réseau n'a aucun contrôle sur les contenus, c'est-à-dire qu'il n'est ni responsable, ni en mesure de contrôler l'affichage desdits contenus, le respect des droits d'auteurs, et/ou la redistribution desdits contenus. Les services OTT sont opérés sur des réseaux dits non gérés, c'est à dire à bande passante et qualité de service (« quality of service (QoS) » non garanties.

Afin d'adresser ces nouveaux services, divers protocoles ont été développés : Apple HLS (HTTP (« Hypertext Transfer Protocol » en terminologie anglo-saxonne) Live Streaming), Microsoft Smooth Streaming (MSS), Adobe HTTP Dynamic Streaming (HDS), MPEG Dynamic Adaptive Streaming over HTTP (MPEG-DASH). Tous ces protocoles sont basés sur un concept de transmission adaptative basée HTTP (« HTTP Adaptive Streaming (HAS) » en terminologie anglo-saxonne). Le concept de HAS repose sur le fonctionnement suivant :
- chaque contenu est encodé sous forme d'un flux binaire (« bitstream » en terminologie anglo-saxonne) selon une pluralité de profils, en utilisant différents codecs, différentes résolutions, différents débits. Cette pluralité de profils permet d'adresser des terminaux (ou des applications fonctionnant sur des terminaux) ayant des capacités différentes (codecs supportés, résolution d'écran, puissance de décodage) et d'adapter les contenus aux variations de bande passante sur le réseau.
- Chaque flux binaire est ensuite découpé en segments, appelés *chunk* en terminologie anglo-saxonne, de quelques secondes selon un format dépendant du protocole à supporter. Pour chaque contenu, un fichier, appelé *manifeste,* indiquant les caractéristiques de chaque profil et les segments correspondants, est créé. Lorsque plusieurs protocoles doivent être supportés, une version de chaque segment est créée pour chaque protocole.
- Les manifestes et les segments correspondants sont stockés sur des serveurs formant des réseaux de diffusion de contenu (« Content Delivery Network (CDN) » en terminologie anglo-saxonne), appelés simplement CDN par la suite. Les CDN fournissent des capacités de cache dans le réseau ce qui permet d'améliorer la QoS notamment en termes de temps d'accès et de latence.
- Un terminal souhaitant jouer un contenu envoie des requêtes à un CDN. Chaque requête demande un segment et précise le profil du segment demandé. C'est donc le terminal qui fixe le profil demandé.

Un contenu peut donc être stocké dans un nombre de versions important en fonction du nombre de profils et de protocoles devant être supportés. Un système de type HAS est donc très consommateur en termes de volume de données à stocker.

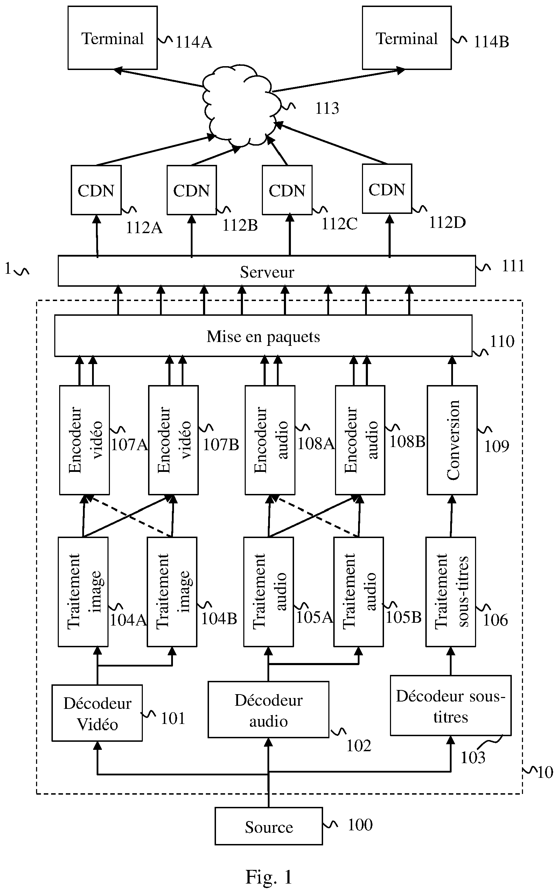

La **Fig. 1** représente schématiquement un exemple d'une chaîne de diffusion 1 de programmes audiovisuels.

La chaîne de diffusion 1 comprend une source 100, un bloc appelé *tête de réseau OTT* 10, un serveur, dit *serveur d'origine,* 111, une pluralité de CDN 112A, 112B, 112C et 112D reliés à des terminaux 114A, 114B par l'intermédiaire d'un réseau Internet 113.

La source 100 fournit un contenu d'origine à la tête de réseau OTT 10. Dans l'exemple de la Fig. 1, ce contenu est encodé sous forme d'un flux binaire comprenant un sous-flux vidéo, au moins un sous-flux audio et au moins un sous-flux de sous-titres.

La tête de réseau OTT 10 est en charge de la préparation du contenu dans des versions conformes à des besoins de terminaux qui pourraient demander ce contenu. La tête de réseau OTT 10 comprend une pluralité de modules, chaque module pouvant être un module physique (« hardware » en terminologie anglo-saxonne) ou logiciel (« software » en terminologie anglo-saxonne). Dans la tête de réseau OTT 10, le flux binaire est reçu par un décodeur vidéo 101 (respectivement un décodeur audio 102, un décodeur de sous-titres 103) qui génère un flux vidéo décodé (respectivement au moins un flux audio décodé, au moins un flux de sous-titres décodé).

Le flux vidéo décodé est fourni à deux modules de traitement d'images 104A et 104B qui génèrent des flux vidéo traités. Le module de traitement d'images 104A est par exemple un module de filtrage réducteur de bruit. Le module de traitement d'images 104B est par exemple un module de rehaussement de contours.

Chaque flux vidéo traité est fourni à deux encodeurs vidéo 107A et 107B. L'encodeur vidéo 107A est par exemple un encodeur conforme au standard AVC (H.264/AVC (ISO/IEC 14496-10 - MPEG-4 Part 10, codage vidéo avancé (« Advanced Video Coding » en terminologie anglo-saxonne) / ITU-T H.264). L'encodeur 107B est par exemple un encodeur conforme au standard HEVC (ISO/IEC 23008-2 - MPEG-H Part 2, codage vidéo haute efficacité (High Efficiency Video Coding en terminologie anglo-saxonne) / ITU-T H.265). Chaque flux audio décodé est fourni à deux modules de traitement audio 105A et 105B qui génèrent des flux audio traités. Le module de traitement audio 105A est par exemple un module de filtrage réducteur de bruit. Le module de traitement d'images 105B est par exemple un module de rehaussement de voix.

Chaque flux audio traité est fourni à deux encodeurs audio 108A et 108B. L'encodeur audio 108A est par exemple un encodeur conforme au standard AAC (Advanced Audio Coding, ISO/CEI 13818-7). L'encodeur 107B est par exemple un encodeur conforme au standard MP3 (MPEG-1/2 Audio Layer 3).

Chaque flux de sous-titres décodé est fourni à un module de traitement de sous-titres 106 qui génèrent des flux de sous-titres traités. Le module de traitement de sous-titres 106 est par exemple un module de filtrage remplaçant certains mots par d'autres en fonction d'usages linguistiques régionaux.

Chaque flux de sous-titres traité est fourni à un module de conversion de format de sous-titres. Chaque flux vidéo issu des encodeurs vidéo 107A et 107B, chaque flux audio issu des encodeurs audio 108A et 108B et chaque flux de sous-titres issu du module de conversion 109 sont transmis à un module de mise en paquets (« packetizer » en terminologie anglo-saxonne) 110. Le module de mise en paquets 110 forme des segments conformes au(x) protocole(s) à supporter. Chaque segment est ensuite transmis à un serveur d'origine 111 qui se charge de transmettre ces segments aux CDN 112A, 112B, 112C et 112D. Chaque terminal 114A (ou 114B) désirant jouer le contenu, demande le contenu à un CDN segment par segment, en changeant de profil si nécessaire d'un segment à un autre.

Dans l'exemple de la Fig. 1, à partir d'un contenu, la tête de réseau OTT 10 a généré, en supposant que deux protocoles de type HAS doivent être supportés, une trentaine de versions différentes du contenu. Les segments correspondant à chaque version sont stockés sur chaque CDN.

Un concept sensiblement différent du concept de HAS, dit *JIT* (Juste à temps, « just in time » en terminologie anglo-saxonne), permet de réduire le nombre de versions à stocker. Une application du concept JIT à la tête de réseau OTT 10 consisterait à ne pas utiliser systématiquement tous les modules dudit bloc. Par exemple, la tête de réseau OTT 10 pourrait s'arrêter aux décodages, c'est-à-dire au décodage vidéo par le décodeur vidéo 101, au décodage audio par le décodeur audio 102 et au décodage de sous-titres par le décodeur de sous-titres 103. Ensuite, sur requête, en fonction des besoins du terminal ayant émis la requête, la tête de réseau OTT 10 active certains modules.

Le concept JIT peut concerner différents étages d'une chaîne de distribution de contenus audiovisuels. Par exemple, le concept JIT peut être appliqué à un étage de traitement (traitement d'images, traitement audio, traitement de sous-titres) et/ou à un étage d'encodage (vidéo ou audio) et/ou à un étage de mise en paquets. Ainsi, par exemple, un étage de mise en paquets peut ne former que des segments conformes à un seul protocole. Une autre application du concept JIT consiste à générer une seule version d'un contenu (un seul traitement vidéo ou audio, un seul encodage vidéo, un seul encodage audio, un seul protocole) appelée version pivot, puis de générer d'autres versions sur requête à partir de la version pivot, par exemple par transcodage.

Une limitation importante des concepts HAS et JIT est qu'ils impliquent des systèmes de distribution de contenus audiovisuels, dits systèmes de type HAS ou systèmes de type JIT, monolithiques et statiques. Ainsi, ces systèmes ont été dimensionnés une fois pour toutes pour traiter un nombre prédéfini de contenus audiovisuels maximum en parallèle. Ces systèmes ne peuvent aller au-delà de ce nombre prédéfini. Par ailleurs, les relations entre les différents modules de traitement de ces systèmes sont figées. Chaque module est ainsi connecté de manière statique avec le module qui lui donne des données et le module à qui il donne des données. Ainsi, quel que soit le contenu et quel que soit le moment, pour générer une version d'un contenu selon un profil donné, les mêmes modules sont systématiquement instanciés et la même chaîne de traitement (« workflow » en terminologie anglo-saxonne) prédéfinie est systématiquement appliquée.

L'aspect monolithique et statique implique que les chaînes de traitement sont rigides et donc peu évolutives. Ainsi, il est très difficile d'intégrer de nouvelles fonctionnalités ou de remplacer des fonctionnalités dans une chaîne de traitement existante. Au mieux une intervention sur la tête de réseau OTT pour la reconfigurer et au pire un remplacement de la tête de réseau OTT sont nécessaires.

Les architectures de type micro-services permettent en théorie d'assouplir les chaînes de traitement. Une architecture de type micro-services est une architecture logicielle dans laquelle une application ou un traitement complexe est décomposée en plusieurs processus indépendants et faiblement couplés appelés micro-services. Chaque micro-service est le plus souvent spécialisé dans une seule tâche. Les micro-services communiquent entre eux en utilisant des API (Interface de programmation d'application, « Application Programming Interface » en terminologie anglo-saxonne) telles que les API REST (transfert d'état représentationnel, « Representational state transfer » en terminologie anglo-saxonne). Un avantage déclaré d'une architecture de type micro-services est qu'en cas de besoin d'une augmentation de ressources pour réaliser un traitement, seul(s) le (ou les) micro-service(s) impliqués dans ce traitement doivent être mis à l'échelle (« scaled » en terminologie anglo-saxonne). Toutefois, ces architectures sont encore difficiles à mettre en œuvre. De plus, elles sont implémentées dans des systèmes qui sont eux-mêmes pré-dimensionnés. Par conséquent, bien qu'en théorie une mise à l'échelle soit possible en cas de besoin, en réalité, il n'est pas possible d'aller au-delà des capacités du système les implémentant. Par ailleurs, en supposant que ce problème de limite de capacité soit solutionné, des procédés permettant de gérer efficacement les mises à l'échelle et les répartitions de charge (« load balancing » en terminologie anglo-saxonne) restent encore à définir. Ces procédés doivent permettre de répartir la charge (« load balancing » en terminologie anglo-saxonne) de mise en œuvre des micro-services entre des ressources déjà disponibles mais aussi de déterminer quand et comment effectuer une mise à l'échelle, *i.e.* quand augmenter ou diminuer les ressources.

Il est souhaitable de pallier ces inconvénients de l'état de la technique. Il est notamment souhaitable de proposer une solution permettant d'aboutir à des systèmes de distribution de contenus audiovisuels non statiques, non monolithiques, et pouvant facilement être mis à l'échelle (« scalable » en terminologie anglo-saxonne) en cas de besoin. Par ailleurs, cette solution devrait permettre d'obtenir un système très agile en termes de modification ou d'ajout de nouvelles fonctionnalités. De plus, ce système doit pouvoir gérer automatiquement les problèmes de répartition de charge (« load balancing » en terminologie anglo-saxonne) et de mise à l'échelle (« scaling » en terminologie anglo-saxonne).

Le document XP032639085, DENEKE TEWODORS ET AL: "Video transcoding time prédiction for proactive load balancing",2014 IEEE INTERNATIONAL CONFERENCE ON MULTIMEDIA AND EXPO (ICME), IEEE, 14 juillet 2014 (2014-07-14) décrit un procédé de prédiction du temps de transcodage d'une vidéo. Le procédé exposé utilise des algorithmes de machine learning entraînés pour construire un modèle de prédiction de temps de transcodage Le module de répartition de charge prend en entrée la sortie du modèle de prédiction de temps de transcodage.

La demande de brevet US2017/078376 décrit un procédé d'encodage distribué qui découpe une vidéo en plusieurs petits segments lesquels sont encodés avec une pluralité de nœuds d'encodage. Le mode de mise en oeuvre mentionne l'utilisation d'un algorithme de machine learning tel qu'un réseau de neurones afin de déterminer des paramètres d'encodage pour chaque segment. L'objectif est de trouver les paramètres d'encodage optimaux permettant d'améliorer l'efficacité du codage.

Le document XP055675322, SRIRAM SETHURAMAN ET AL: "Noniterative Content-Adaptive Distributed Encoding Through ML Techniques",SMPTE MOTION IMAGING JOURNAL, vol. 127, no. 9, 1 octobre 2018 (2018-10-01) décrit un procédé d'encodage distribué. Il suggère d'utiliser un procédé de machine learning afin d'estimer des paramètres d'encodage, plus particulièrement des paires (B, R) avec B un nombre de bits et R une résolution spatiale L'objectif est d'améliorer l'efficacité de codage et donc le débit.

### EXPOSE DE L'INVENTION

Selon un premier aspect de l'invention, l'invention concerne un module élémentaire destiné à être utilisé dans au moins une chaîne de traitement d'un système permettant de distribuer des contenus audiovisuels stockés ou produits en direct par des sources vers des terminaux d'affichage, chaque contenu étant reçu par un terminal sous forme d'une succession de fichiers consécutifs, appelés segments, chaque segment étant distribué à un terminal suite à une transmission d'une requête par ledit terminal et étant obtenu par une application d'une chaîne de traitement à une portion d'un contenu, le module élémentaire exécutant un traitement d'un type prédéfini de la chaîne de traitement. Le module élémentaire comprend : une pluralité variable d'unités de traitement disponibles pour exécuter le traitement du type prédéfini, le module élémentaire obtenant régulièrement une information représentative de chaque unité de traitement ajoutée ou supprimée de la pluralité, chaque unité de traitement ne conservant aucune information concernant un traitement une fois le traitement effectué; un module, dit module central, comprenant un module de communication apte à recevoir des demandes de premières données, chaque demande comprenant une information représentative d'une chaîne de traitement à appliquer à une portion d'un contenu correspondant à un segment demandé dans une requête par un terminal pour obtenir lesdites premières données et une information représentative de paramètres de configuration à appliquer à au moins une unité de traitement dudit module élémentaire pour générer les premières données, chaque unité de traitement prenant en compte l'information représentative des paramètres de configuration comprise dans une demande de premières données pour effectuer un traitement correspondant à ladite demande de premières données; apte à transmettre une demande de secondes données à une unité précédant le module élémentaire dans la chaîne de traitement déterminée à partir de l'information représentative de la chaîne de traitement, lesdites secondes données correspondant à ladite portion traitée ou pas par une ou plusieurs unités précédant le module élémentaire dans la chaîne de traitement ; et, apte à transmettre des premières données lorsqu'elles sont disponibles à une unité ayant émis une demande pour lesdites premières données ; un module de mise à l'échelle, apte à déterminer un nombre d'unités de traitement à allouer pour une mise en œuvre d'un ensemble des traitements demandés au module élémentaire dans des demandes de premières données, la détermination dudit nombre s'appuyant sur un modèle de mise à l'échelle correspondant au traitement du type prédéfini fourni par un module de modélisation compris dans ledit système ; et, un module de répartition de charge apte à choisir pour chaque demande reçue au moins une unité de traitement parmi des unités de traitement allouées par le module de mise à l'échelle pour traiter des secondes données afin d'obtenir des premières données demandées et lançant le traitement du type prédéfini par chaque unité de traitement choisie, le choix des unités de traitement s'appuyant sur un modèle de répartition de charge fourni par ledit module de modélisation ; chaque modèle étant un réseau de neurones de type à apprentissage profond, entraînés par le module de modélisation en cours de fonctionnement dudit système à partir de métriques obtenues par un module d'agrégation de métriques compris dans ledit système fournies par chaque module élémentaire dudit système exécutant le traitement du type prédéfini, lesdites métriques étant représentatives d'un fonctionnement de chaque module élémentaire dudit système exécutant le traitement du type prédéfini.

Selon un mode de réalisation, chaque modèle est un réseau de neurones hybrides dans lequel un réseau de neurones de type réseau de neurones convolutif, dit réseau de neurones CNN, est suivi d'un réseau de neurones de type à longue mémoire à court-terme, dit réseau de neurones LSTM, puis d'un réseau de neurones de type perceptron multi-niveaux, dit réseau de neurones MLP.

Selon un deuxième aspect de l'invention, l'invention concerne un système de distribution de contenus audiovisuels stockés ou produits en direct par des sources vers des terminaux d'affichage, chaque contenu étant reçu par un terminal sous forme d'une succession de fichiers consécutifs, appelés segments, chaque segment étant distribué à un terminal suite à une transmission d'une requête par ledit terminal et étant obtenu par une application d'une chaîne de traitement à une portion d'un contenu. Ledit système est tel que, au moins une chaîne de traitement mise en œuvre par le système de distribution comprend au moins un module élémentaire selon le premier aspect apte à mettre en œuvre un traitement d'un type de traitement prédéfini, et ledit système comprend en outre : un module d'agrégation de métriques en charge d'obtenir régulièrement des métriques de chacun des modules élémentaires dudit système et, pour chaque type de traitement prédéfini, d'agréger les métriques obtenues de chaque module de traitement dudit système mettant en œuvre ledit type de traitement prédéfini ; et, un module de modélisation récupérant les métriques spécifiques à chaque type de traitement prédéfini fournies par le module d'agrégation de métriques et, à partir de ces métriques, définissant, pour chacun desdits types de traitement prédéfini, un modèle de mise à l'échelle et un modèle de répartition de charge spécifique audit type de traitement prédéfini.

Selon un mode de réalisation, la définition par entraînement des modèles de mise à l'échelle et de répartition de charge est effectuée de manière asynchrone par rapport au fonctionnement de chaque chaîne de traitement comprenant au moins un module élémentaire mis en œuvre par ledit système.

Selon un troisième aspect de l'invention, l'invention concerne un procédé de traitement exécuté par un module élémentaire exécutant un type de traitement prédéfini dans au moins une chaîne de traitement d'un système de distribution de contenus audiovisuels stockés ou produits en direct par des sources vers des terminaux d'affichage, chaque distribution de contenus se faisant sous forme de fichiers, appelés segments, chaque segment distribué à un terminal ayant fait l'objet d'une requête transmise par ledit terminal et résultant d'une application d'une chaîne de traitement à une portion de contenu demandée par la requête. Le procédé comprend : recevoir au moins une demande de premières données, chaque demande comprenant une information représentative d'une chaîne de traitement à appliquer à une portion d'un contenu correspondant à un segment demandé dans une requête par un terminal pour obtenir lesdites premières données et une information représentative de paramètres de configuration à appliquer à au moins une unité de traitement pour générer les premières données ; pour chacune desdites demandes, extraire l'information représentative des paramètres de configuration contenus dans ladite demande et transmettre une demande de secondes données à une source ou à une unité précédant le module élémentaire dans la chaîne de traitement déterminée à partir de l'information représentative de la chaîne de traitement, lesdites secondes données correspondant à ladite portion traitée ou pas par une ou plusieurs unités précédant le module élémentaire dans la chaîne de traitement ; déterminer un nombre d'unités de traitement à allouer pour exécuter chaque traitement demandé dans chaque demande de premières données reçue en utilisant un modèle de mise à l'échelle correspondant au traitement du type prédéfini fourni par un module de modélisation compris dans ledit système, chaque unité de traitement appartenant à une pluralité d'unités de traitement disponibles pour exécuter le traitement du type prédéfini, le module élémentaire obtenant régulièrement une information représentative de chaque unité de traitement ajoutée ou supprimée de ladite pluralité, et allouer ou désallouer des unités de traitement disponibles en prenant en compte un nombre d'unités de traitement déjà allouées disponibles ; choisir pour chaque demande au moins une unité de traitement parmi les unités de traitement allouées en utilisant un modèle de répartition de charge fourni par le module de modélisation et activer chaque unité de traitement choisie afin qu'elle applique le type de traitement prédéfini sur les secondes données à réception des secondes données, chaque unité de traitement prenant en compte l'information représentative des paramètres de configuration correspondant au traitement qu'elle doit exécuter, chaque modèle étant un réseau de neurones de type à apprentissage profond, entraîné par le module de modélisation en cours de fonctionnement dudit système à partir de métriques obtenues par un module d'agrégation de métriques compris dans ledit système fournies par chaque module élémentaire dudit système exécutant le traitement du type prédéfini, lesdites métriques étant représentatives d'un fonctionnement de chaque module élémentaire dudit système exécutant le traitement du type prédéfini ; et, pour chaque demande, transmettre les premières données lorsqu'elles sont disponibles à une unité ayant émis la demande pour lesdites premières données ; chaque unité de traitement ne conservant aucune information concernant un traitement une fois le traitement effectué.

Selon un mode de réalisation, l'entraînement des modèles de mise à l'échelle et de répartition de charge est effectué de manière asynchrone par rapport au fonctionnement de chaque chaîne de traitement comprenant le module élémentaire.

Selon un mode de réalisation, l'entraînement de chaque modèle utilise un jeu de caractéristiques prenant la forme d'un vecteur de paramètres, certains paramètres étant eux même des vecteurs. Selon un mode de réalisation, le jeu de caractéristiques utilisé pour l'entraînement du modèle de mise à l'échelle comprend des caractéristiques permettant d'ajuster des paramètres dudit modèle afin d'atteindre un objectif d'évitement de surcharge des unités de traitement allouées. Selon un quatrième aspect de l'invention, l'invention concerne un produit programme d'ordinateur, comportant des instructions pour mettre en œuvre, par un dispositif, le procédé selon le troisième aspect par un processeur du dispositif.

Selon un cinquième aspect de l'invention, l'invention concerne des moyens de stockage, stockant un programme d'ordinateur comportant des instructions pour mettre en œuvre, par un dispositif, le procédé selon le troisième aspect lorsque ledit programme est exécuté par un processeur dudit dispositif.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] décrit un système de distribution de contenus audiovisuels classiques ;
[Fig. 2A] décrit un système de distribution de contenus audiovisuels à un premier instant pendant la distribution ;
[Fig. 2B] décrit un système de distribution de contenus audiovisuels à un deuxième instant pendant la distribution ;
[Fig. 2C] décrit un système de distribution de contenus audiovisuels à un troisième instant pendant la distribution ;
[Fig. 3] illustre schématiquement un module élémentaire apte à exécuter un traitement d'un type prédéfini d'une chaîne de traitement ;
[Fig. 4] illustre un exemple d'architecture matérielle du module élémentaire utilisé dans le cadre de l'invention ;
[Fig. 5] illustre schématiquement une procédure de lancement d'une chaîne de traitement ; et, [Fig. 6] illustre schématiquement un procédé exécuté par un module élémentaire lors d'une réception d'une ou plusieurs demandes de premières données.

### EXPOSE DETAILLE DE MODES DE REALISATION

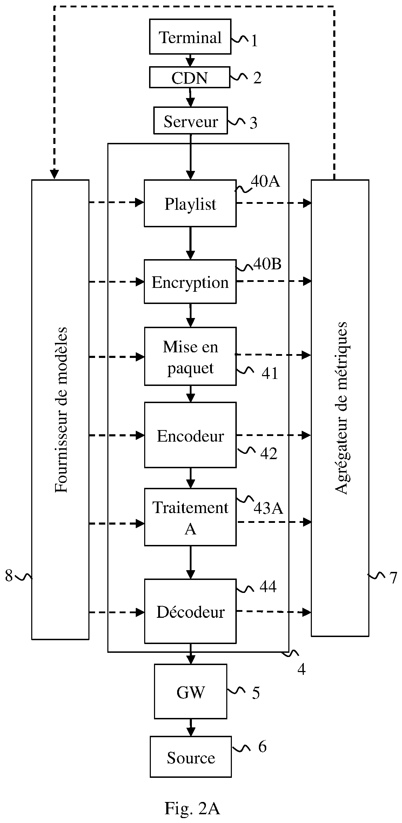

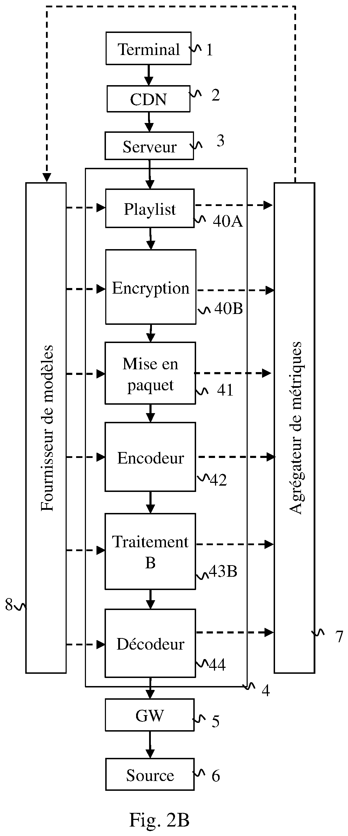

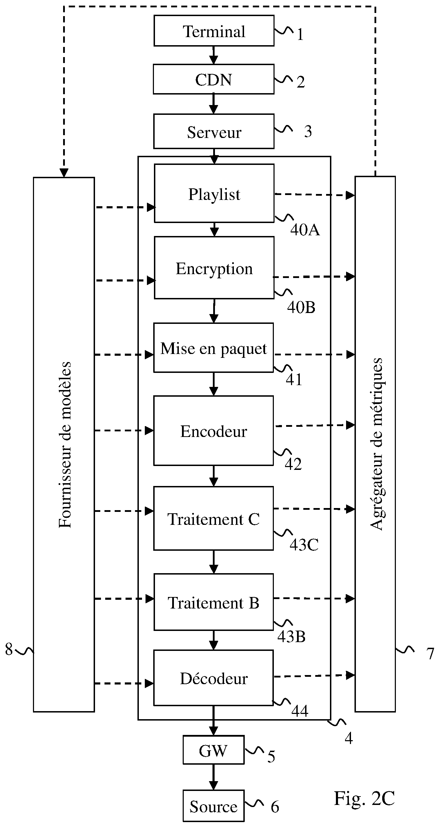

Les **Figs. 2A****,** **2B** et **2C** décrivent une évolution d'un système de distribution de contenus audiovisuels en cours de fonctionnement en cas d'utilisation de l'invention.

A un premier instant, correspondant à la Fig. 2A, ce système de distribution comprend un terminal d'affichage 1, au moins un CDN 2, un serveur d'origine 3, appelé simplement *serveur* par la suite, une chaîne de traitement 4, une passerelle (« gateway » en terminologie anglo-saxonne) 5, une source 6, un module d'agrégation de métriques 7, et un module de modélisation 8. La source 6 comprend au moins un contenu audiovisuel, appelé simplement *contenu* par la suite, pouvant être demandé par le terminal 1 suivant un profil particulier. Dans un cas de diffusion temps réel (« live » en terminologie anglo-saxonne), la passerelle 5 est en charge de transformer un flux continu de données en fichiers. La chaîne de traitement 4 comprend un ensemble de modules de traitement comprenant un module de décodage 44 apte à exécuter un décodage audio et vidéo, un module de traitement d'images 43A apte à appliquer un traitement d'images A, un module d'encodage 42 apte à effectuer un encodage audio et vidéo et un module de mise en paquets 41 apte à générer des segments conformes à un protocole prédéterminé, un module d'encryption et de gestion de droits (« Digital Right Management (DRM) » en terminologie anglo-saxonne) 40B apte appliquer un traitement sur les segments de manière, notamment, à empêcher une utilisation illicite de ces segments et un module de génération de listes de lecture (« playlist » en terminologie anglo-saxonne) 40A apte à générer des listes de segments correspondant au contenu. Le traitement d'images A est par exemple un filtrage réducteur de bruit. Chaque module de traitement de la chaîne de traitement 4 peut être un module logiciel (« software » en terminologie anglo-saxonne) exécuté par une ou plusieurs unités de traitement programmables ou matériel (« hardware » en terminologie anglo-saxonne) exécuté par une unité de traitement dédiée. Les modules de traitement de la chaîne de traitement 4 peuvent être colocalisés géographiquement et reliés par exemple par un bus de communication ou dispersés et reliés entre eux par un réseau de communication.

Chaque module de traitement de la chaîne de traitement 4 produit, au cours de son fonctionnement, des métriques représentatives dudit fonctionnement comprenant des données métiers ainsi que des données systèmes.

Les données métiers comprennent par exemple : des informations représentatives d'une qualité de données générées par un module de traitement, et/ou, des paramètres de configuration d'un module de traitement, et/ou des caractéristiques d'implémentation d'un module de traitement, et/ou, des caractéristiques de données à traiter par un module de traitement, et/ou des informations représentatives de performances d'un module de traitement. Par exemple :
- pour un module de décodage, une donnée métier est un nombre d'images décodées par seconde représentatif de performances du module de décodage ;
- pour un module de traitement d'images, une donnée métier est un temps de traitement d'une image en fonction d'une mesure représentative d'une complexité de ladite image telle que par exemple une variance ou une entropie de ladite image, ce temps de traitement étant représentatif de performances du module de décodage ;
- pour un module d'encodage audio et vidéo, des données métier peuvent être un rapport signal sur bruit (« Peak Signal to Noise Ratio (PSNR) » représentatif d'une qualité d'encodage audio, et/ou un PSNR représentatif d'une qualité d'encodage vidéo et/ou une résolution d'images encodées représentative d'un paramètre de configuration du module d'encodage vidéo;
- pour un module de mise en paquets, une donnée métier est un nombre moyen de bits de rembourrage (« stuffing bits » en terminologie anglo-saxonne) utilisés lors de chaque création de paquets représentatif d'une qualité de la mise en paquets.

Des données système comprennent par exemple un nombre de requêtes traitées par un module et/ou un pourcentage d'utilisation d'une unité de traitement telle qu'un CPU et/ou un nombre d'accès à une mémoire cache, etc.

Le module d'agrégation de métriques 7 est en charge de demander régulièrement des métriques à chacun des modules de traitement du système de distribution de contenus audiovisuels et, pour chaque type de traitement mis en œuvre par un ou plusieurs modules de traitement dudit système, d'agréger les métriques obtenues de chaque module de traitement dudit système mettant en œuvre ledit type de traitement. Dans le cadre de l'invention, ces métriques sont fournies au module de modélisation 8. Dans un mode de réalisation, le module d'agrégation de métriques 7 est un module de type *Prometheus* tel que décrit dans le site internet https://prometheus.io/docs/introduction/overview/.

Le module de modélisation 8 récupère les métriques spécifiques à chaque type de traitement mis en œuvre par un ou plusieurs modules de traitement dudit système fournies par le module d'agrégation de métriques 7. A partir de ces métriques, il définit, pour chacun desdits types de traitement, au moins un modèle de comportement spécifique audit type de traitement.

Chaque module de traitement de la chaîne de traitement 4 doit résoudre au moins deux problèmes : un problème de mise à l'échelle et un problème de répartition de charge. Le problème de mise à l'échelle consiste à déterminer un nombre d'unités de traitement à allouer pour exécuter un ensemble des traitements demandés au module de traitement. Le problème de répartition de charge consiste, une fois le nombre d'unités de traitement déterminé, à déterminer comment répartir la charge de l'ensemble des traitements demandés au module de traitement entre les différentes unités de traitement allouées. Chaque module de traitement utilise pour chaque problème à résoudre, un modèle de comportement dédié au traitement mis en œuvre par ledit module de traitement et audit problème à résoudre. Chaque module de traitement utilise donc un modèle de comportement pour résoudre le problème de mise à l'échelle, dit modèle de mise à l'échelle, et un modèle de comportement pour résoudre le problème de répartition de charge, dit modèle de répartition de charge. Le modèle de mise à l'échelle reçoit en entrée notamment des informations représentatives de traitements demandés au module de traitement et détermine à partir de ces informations, un nombre d'unités de traitement à allouer. Le modèle de répartition de charge reçoit en entrée notamment les informations représentatives des traitements demandés au module de traitement et génère en sortie une information représentative d'une répartition de la charge sur les unités de traitement allouées.

Dans le cadre de l'invention, chaque modèle de comportement utilisé est un réseau de neurones de type à apprentissage profond (« deep learning » en terminologie anglo-saxonne). Chaque modèle de comportement est donc défini par apprentissage, *i.e* par entraînement. Les algorithmes d'apprentissage profond sont particulièrement adaptés au contexte de l'invention. En effet, contrairement aux algorithmes plus traditionnels d'apprentissage machine (« Machine Learning » en terminologie anglo-saxonne), les algorithmes d'apprentissage profond permettent d'éviter une étape d'extraction de caractéristiques avant l'application de l'algorithme d'apprentissage sur ces caractéristiques. Or, dans l'invention, les données d'entrées de l'algorithme d'apprentissage, c'est à dire les données fournies par le module d'agrégation de métriques 7, en plus d'être très volumineuses, sont des métriques très hétérogènes, c'est-à-dire de types, structures et natures très différents. Par exemple, un module tel que le module d'encodage 42, génère des métriques comprenant :
- des paramètres de configuration du module d'encodage,
- un standard d'encodage appliqué par le module d'encodage (AVC, HEVC, ...),
- des caractéristiques d'implémentation dudit standard d'encodage,
- une qualité vidéo visée et une qualité vidéo obtenue,
- un débit visé et un débit obtenu,
- une résolution d'encodage vidéo,
- un nombre d'unités de traitement utilisées par le module d'encodage pour un traitement donné,
- un type d'unités de traitement utilisées,
- un pourcentage d'utilisation des unités de traitement et du module,
- une information représentative du contenu à encoder,
- une latence du module d'encodage,
- un nombre de succès de cache (« cache hit » en terminologie anglo-saxonne) et un nombre de défauts de cache (« cache miss » en terminologie anglo-saxonne),
- un nombre de contenus à traiter, etc...

Il est alors très difficile de déterminer quelles caractéristiques sont pertinentes, ou plus pertinentes que d'autres pour résoudre un problème donné. Les algorithmes d'apprentissage profond permettent de contourner cette difficulté. En effet, les algorithmes d'apprentissage profond sont capables d'extraire eux-mêmes les caractéristiques pertinentes et de trouver des modèles dans un grand volume de données hétérogènes.

Il existe plusieurs types de réseaux de neurones:
- les réseaux de neurones basiques de type perceptron multi-niveaux (« Multi-Layer Perceptron » en terminologie anglo-saxonne), appelés par la suite *réseaux de neurones MLP;*
- les réseau de neurones récursifs de type récurrent (« Récurrent Neural Network (RNN) » en terminologie anglo-saxonne), appelés par la suite *réseaux de neurones RNN,* et de type à longue mémoire à court-terme (Long Short-Term Memory (LSTM) en terminologie anglo-saxonne), appelés par la suite *réseaux de neurones LSTM ;*
- les réseaux de neurones convolutifs : (« Convolutional Neural Network (CNN) » en terminologie anglo-saxonne), appelés par la suite *réseaux de neurones CNN.*

Les algorithmes d'apprentissage profond utilisent communément des réseaux dits *hybrides* dans le sens où ils combinent plusieurs types de réseaux de neurones. Dans le cas de l'invention, chaque modèle de comportement est un réseau de neurones hybride dans lequel un réseau de neurones CNN est suivi d'un réseau de neurones LSTM puis d'un réseau de neurones MLP, le réseau de neurones CNN comprenant un grand nombre de couches. Par exemple, dans un mode de réalisation, le réseau de neurones CNN comprend dix couches. Comme tous réseaux de neurones, chaque réseau de neurones, *i.e.* chaque modèle de comportement basé sur un réseau de neurones, utilisé dans le système de distribution de contenus audiovisuels de l'invention doit être entraîné, *i.e.* doit effectuer un apprentissage. L'entraînement consiste à déterminer des paramètres du réseau de neurones. La détermination de ces paramètres s'appuie sur des données d'entrées du réseau de neurones, dites données d'entraînement, pour lesquelles le résultat que doit donner le réseau de neurones est connu. On cherche alors des paramètres du réseau de neurones permettant d'obtenir des résultats connus pour un grand nombre de données d'entraînement. Dans le cadre de l'invention, pour un module de traitement donné, les données d'entrées sont des métriques fournies par ledit module de traitement. Au démarrage du système de distribution de contenus audiovisuels, aucun traitement n'ayant été effectué, aucune métrique n'est disponible pour effectuer un entraînement (*i.e.* un apprentissage). Dans un mode de réalisation, préalablement au lancement du système de distribution de contenus audiovisuels selon l'invention, chaque réseau de neurones a été entraîné à partir de métriques fournies par un opérateur pour lesquelles des résultats de traitement sont connus. Pour chaque module de traitement, les métriques fournies sont des métriques identiques aux métriques fournies par ledit module de traitement. Ces métriques ont été par exemple obtenues de modules de traitement de systèmes de distribution de contenus audiovisuels classiques, tels que des systèmes de type HAS ou JIT, équivalents audit module de traitement. Pour le modèle de mise à l'échelle, les résultats connus correspondant à ces métriques comprennent des nombres d'unités de traitement allouées. Pour le modèle de répartition de charge, les résultats connus correspondant à ces métriques comprennent une information représentative d'une répartition de traitements demandés sur des unités de traitement allouées. Dans un mode de réalisation, les métriques comprennent des métriques pour lesquelles aucune surcharge des unités de traitement allouées ou aucune latence de traitement inacceptable n'ont été constatées et des métriques pour lesquelles des surcharges et des latences inacceptables ont été constatées. Les réseaux de neurones sont alors définis de manière à exclure les cas de surcharge.

Les réseaux de neurones ainsi entraînés sont utilisés au démarrage du système de distribution de contenus audiovisuels. Par la suite, l'entraînement des réseaux de neurones se poursuit au cours du fonctionnement du système de distribution de contenus audiovisuels selon l'invention en utilisant les métriques fournies par les modules de traitement dudit système. Ainsi, l'impact des métriques fournies par l'opérateur dans la définition des réseaux de neurones est peu à peu atténué.

Par exemple, dans le cas du module d'encodage vidéo 42, l'entraînement du modèle de mise à l'échelle utilise un jeu de caractéristiques prenant la forme d'un vecteur de paramètres, certains paramètres étant eux-mêmes des vecteurs. Ce vecteur de paramètres comprend les paramètres suivants:
- *Video_Codec_id* : identifiant de l'encodeur vidéo utilisé (AVC, HEVC,...) ;
- *Codec_implementation_id* : identifiant d'une implémentation de l'encodeur utilisée ;
- *video_Profile* : profil vidéo utilisé par l'encodeur ;
- *Level* : Niveau (« Level » en terminologie anglo-saxonne) utilisé par l'encodeur ;
- *Output_Bitrate* : débit de sortie de l'encodeur ;
- *Output_Width* : largeur des images en sortie de l'encodeur ;
- *Output_Height :* hauteur des images en sortie de l'encodeur ;
- *Output_FrameRate* : nombre d'images par seconde en sortie de l'encodeur ;
- *Quality_level :* niveau de qualité en sortie de l'encodeur ;
- *Segment_duration* : durée d'un segment ;
- *GopSize* : taille d'un GOP (« Groupe Of Pictures » en terminologie anglo-saxonne) ;
- *Segment_complexity* : information représentative d'une complexité de la scène représentée par le segment ;
- *Unit_type_id* : type d'unité de traitement utilisée ;
- *vCpu_type_id* : identifiant associé à chaque type de CPU virtuel ;
- *vCpu_frequency* : fréquence de fonctionnement du CPU ;
- *vCpu_cores* : nombre de cœurs dans le CPU ;
- *Unit_vCpu_count* : nombre de CPU virtuels par unité de traitement ;
- *Memory_Size* : Taille mémoire RAM (Random Access Memory) ;
- *VRTR (RealTimeRatio 1, RealTimeRatio 2,* ... , *RealTimeRatio_m)* : vecteur des *m* derniers ratio entre le temps d'exécution d'une tâche et le temps réel. En pratique, le temps d'exécution est calculé entre l'instant de réception d'une requête et la réponse à cette requête. Le temps-réel représente la durée d'un segment (*i.e. Segment_duration*) ;
- *NAA* : représente un nombre d'unités de traitement déjà allouées disponibles.

Dans le cas du module de mise en paquets 41, l'entraînement du modèle de mise à l'échelle utilise un deuxième jeu de caractéristiques prenant la forme d'un vecteur de paramètres, certains paramètres étant eux-mêmes des vecteurs. Ce vecteur de paramètres comprend les paramètres suivants:
- *Packaging_type_id* : identifiant d'un format de transport *(i.e.* MPEG-2 TS (ISO/IEC 13818-1), mp4 (ISO/IEC 14496-14) , fmp4 (mp4 fragmenté, « fragmented mp4 » en terminologie anglo-saxonne));
- *Segment_duration ;*
- *Fragment_duration* : durée d'une sous-partie d'un segment ;
- *chunk_duration* : durée d'une sous-partie d'un fragment ;
- *video_profile* ;
- *Audio_profïle* : profil audio ;
- *Video_codec_id ;*
- *Video_bitrate* : débit vidéo ;
- *Audio_codec_id* : identifiant du codeur audio ;
- *Audio_bitrate* : débit audio ;
- *Encryption_type_id* ; type d'encryption utilisée par le module d'encryption 40B ;
- *VRTR (RealTimeRatio 1, RealTimeRatio 2,* ... , *RealTimeRatio_m) ;*
- *NAA.*

Pour rappel, les notions de segment, fragment et chunk dépendent du format de transport utilisé. Le format MPEG-2 TS offre une grande granularité en termes d'accès aléatoire à des portions de flux décodables indépendamment. Ainsi, le format MPEG-2 TS permet d'avoir des segments dont les premiers octets peuvent être traités par un décodeur dès réception. A l'origine, le format mp4 n'offrait pas une granularité aussi fine que le format MPEG-2 TS. En effet, un segment mp4 possède une structure syntaxique empêchant un décodeur de commencer à traiter rapidement les premiers octets reçus. Pour pallier ce défaut, les segments mp4 ont été divisés en fragments, un fragment étant une portion de flux débutant par un point de synchronisation à partir duquel un décodeur peut débuter une analyse syntaxique (« parsing » en terminologie anglo-saxonne) dudit flux. Par la suite, la granularité des fragments étant jugée insuffisante, ceux-ci ont été divisés en chunks, un chunk étant lui aussi une portion de flux débutant par un point de synchronisation à partir duquel un décodeur peut débuter une analyse syntaxique dudit flux.

Dans le cas du module de génération de listes de lecture 40A, l'entraînement du modèle de mise à l'échelle utilise un troisième jeu de caractéristiques prenant la forme d'un vecteur de paramètres, certains paramètres étant eux-mêmes des vecteurs. Ce vecteur de paramètres comprend les paramètres suivants :
- *HAS_protocol_id* : identifiant d'un protocole de HAS (i.e. HLS, DASH, ...);
- *Packaging_type_id ;*
- *Video_profile* ;
- *Audio_profile* ;
- *Subtitles_profile* : profil utilisé pour les sous-titres ;
- *Encryption_type_id ;*
- *Video_Rolling_Key* : information représentative d'une clé de cryptage vidéo tournante utilisée par le module d'encryptage 40B ;
- *Audio_Rolling_Key* : information représentative d'une clé de cryptage audio tournante utilisée par le module d'encryptage 40B ;
- *Segment_duration :*
- *Ultra Low_latency* : information indiquant si une très haute granularité du flux est utilisée ;
- *Refresh_frequency* : information représentant une fréquence de rafraîchissement d'une liste de lecture ;
- *VRTR (RealTimeRatio_1, RealTimeRatio 2,* ... , *RealTimeRatio_m)* ;
- *NAA*.

Dans le cas du module d'encodage vidéo 42, l'entraînement du modèle de répartition de charge utilise un quatrième jeu de caractéristiques prenant la forme d'un vecteur de paramètres, certains paramètres étant eux-mêmes des vecteurs. Ce vecteur de paramètres comprend les paramètres suivants :
- *Codec_id* ;
- *Codec_implementation_id* ;
- *Video_Profïle* ;
- *Level* ;
- *Output_Bitrate* ;
- *Output_Width* ;
- *Output_Height* ;
- *Output_FrameRate* ;
- *Quality_level* ;
- *Segment_duration* ;
- *GopSize* ;
- *Segment_complexity* ;
- *n* : nombre d'unités de traitement utilisées.

Pour chacune des n unités de traitement, le vecteur de paramètres comprend les paramètres suivants : *Unit_type_id_i* (où *i* est l'indice d'une des *n* unités de traitement) , *vCpu_type_id_i, vCpu_frequency_i*, *vCpu_cores_i*, *vCpu_count_i*, *Memory_Usage_i*, *Success_Balancing_i*. Les paramètres « *success_Balancing_i* » représentent un ratio entre un nombre de tâches réalisées par l'unité de traitement *i* et une somme des *RealTimeRatio* pour chacune de ces tâches.

Les paramètres « *Memory_Usage_i* » représentent un taux d'utilisation de la mémoire. Dans le cas du module de mise en paquets 41, l'entraînement du modèle de répartition de charge utilise un cinquième jeu de caractéristiques prenant la forme d'un vecteur de paramètres, comprenant les paramètres suivants:
- *Packaging_type_id ;*
- *Segment_duration ;*
- *Fragment_duration ;*
- *Chunk_duration ;*
- *Video_profiles* ;
- *Audio_profiles ;*
- *Video_codec_id ;*
- *Video_bitrate ;*
- *Audio_codec_id* ;
- *Audio_bitrate ;*
- *Encryption_type_id ;*
- *n* ;

Pour chacune des n unités de traitement, le vecteur de paramètres comprend les paramètres suivants : *Unit_type_id_i*, *vCpu_type_id_i*, *vCpu_frequency_i*, *vCpu_cores_i, vCpu_count_i*, *Memory_Usage_i*, *Success_Balancing_i*.

Dans le cas du module de génération de listes de lecture 40A, l'entraînement du modèle de répartition de charge utilise un sixième jeu de caractéristiques prenant la forme d'un vecteur de paramètres comprenant les paramètres suivants:
- *HAS_protocol_id ;*
- *Packaging_type_id ;*
- *Video_profiles* ;
- *Audio_profïles ;*
- *Subtitles_profiles ;*
- *Encryption_type_id ;*
- *Video_Rolling_Key ;*
- *Audio_Rolling_Key ;*
- *Segment_duration ;*
- *Low_latency ;*
- *Refresh_frequency ;*
- *n* ;

Pour chacune des *n* unités de traitement, le vecteur de paramètres comprend : *Unit_type_id_i*, *vCpu_type_id_i*, *vCpu_frequency_i*, *vCpu_cores_i, vCpu_count_i*, *Memory_Usage_i*, *Success_Balancing_i*.

Dans un mode de réalisation, l'entraînement (*i.e.* l'apprentissage) des réseaux de neurones (*i.e.* des modèles de mise à l'échelle et de répartition de charge) effectué par le module de modélisation 8 se fait de manière asynchrone, c'est-à-dire que :
- la récupération des métriques nécessaires à l'apprentissage peut se faire hors ligne ou de manière totalement désynchronisée du fonctionnement de la chaîne de traitement 4 (ou de chaque chaîne de traitement mise en œuvre par le système de distribution de contenus audiovisuels) ;
- l'entraînement et la mise à jour des réseaux de neurones par le module de modélisation 8 est un processus parallèle totalement décorrélé des processus exécutés dans la chaîne de traitement 4 (ou dans chaque chaîne de traitement mise en œuvre par le système de distribution de contenus audiovisuels) ;
- chaque module de la chaîne de traitement 4 peut demander une mise à jour des modèles de mise à l'échelle et de répartition de charge au module de modélisation 8 à tout moment, sans que ces demandes de mises à jour soient liées aux processus exécutés par ledit module ou par tout autre module de la chaîne de traitement 4 (ou de chaque chaîne de traitement mise en œuvre par le système de distribution de contenus audiovisuels).

Dans l'exemple de la Fig. 2A, le système de distribution est en cours de distribution d'un contenu. Le terminal 1 a fixé un profil et le système de distribution fournit des segments compatibles avec ce profil. Comme nous l'avons vu plus haut, pour chaque segment du contenu, le terminal 1 envoie une requête afin d'obtenir ledit segment contenant une information représentative du profil souhaité. Chaque segment a été choisi dans une liste de lecture (« playlist ») fournie par le module de génération de playlist parmi un ensemble de segments correspondant à des versions différentes d'une même sous-partie du contenu. Comme nous le décrivons par la suite, la chaîne de traitement 4 est définie de manière dynamique pour chaque segment par le terminal 1 ou par un dispositif intermédiaire qui peut être le CDN 2 ou le serveur 3. Pour chaque segment, chaque module de traitement a été choisi dans un ensemble de modules de traitement candidats aptes à appliquer exactement le même traitement. Ainsi, bien que d'un segment à un autre, la chaîne de traitement 4 peut appliquer des traitements strictement identiques, chaque traitement peut être exécuté par des modules de traitement différents. Pour un traitement d'un type donné, un changement de module de traitement peut être motivé par une non disponibilité temporaire d'un module de traitement, par exemple, lorsque ce module de traitement est déjà utilisé pour générer un autre segment, par un dysfonctionnement dudit module de traitement, par une surcharge de l'unité de calcul devant implémenter ledit module de traitement, par un choix d'un opérateur qui souhaite privilégier certaines unités de traitement plutôt que d'autres, etc.

A un deuxième instant représenté en Fig. 2B, toujours en cours de distribution du contenu, un opérateur s'est par exemple rendu compte qu'une qualité du contenu affiché sur le terminal 1 n'était pas suffisante. Dans ce contexte, un traitement d'images B serait plus approprié que le traitement d'images A. Le traitement d'images B est par exemple un filtrage permettant de rehausser des contours. Dans ce cas, l'opérateur envoie par exemple une commande au terminal 1 afin que le terminal 1 génère une requête permettant de modifier la chaîne de traitement 4. Suite à cette commande, le module de traitement d'images 43A est remplacé par un module de traitement d'images 43B mettant en œuvre le traitement d'images B. Suite au remplacement du module de traitement d'images 43A par le module de traitement d'images 43B, le module d'agrégation de métriques 7 demande des métriques au module de traitement d'images 43B. Le module de modélisation 8 récupère les métriques spécifiques au module de traitement d'images 43B fournies par le module d'agrégation de métriques 7. Deux modes de réalisation sont alors envisageables. Dans un mode de réalisation, le module de modélisation 8 apprend un modèle de mise à l'échelle et un modèle de répartition de charge spécifiques au module de traitement d'images 43B indépendant des modèles de comportement du module de traitement d'images 43A. Dans un autre mode de réalisation, le module de modélisation considère que les modèles de comportement appris pour le module de modélisation 43A constitue une bonne base de départ pour apprendre les modèles de comportement de module de traitement d'images 43B. Ainsi, les paramètres des réseaux de neurones appris pour les modèles de comportement du module de traitement d'images 43A servent à initialiser les paramètres du réseau de neurones des modèles de comportement du module de traitement d'images 43B.

A un troisième instant, représenté en Fig. 2C, toujours en cours de distribution du contenu, l'opérateur s'est par exemple rendu compte que le contenu est diffusé frauduleusement sur des terminaux non autorisés. Dans ce contexte, afin de faire cesser cette fraude, un traitement C de type tatouage numérique est approprié. Dans ce cas, l'opérateur envoie par exemple une commande au terminal 1 afin que le terminal 1 génère une requête permettant de modifier la chaîne de traitement 4. Suite à ce paramétrage par l'opérateur, un module de tatouage numérique 43C est ajouté à la chaîne de traitement 4 entre le module de traitement 43B et le module d'encodage 42. Suite à l'ajout du module de traitement d'images 43C, le module d'agrégation de métriques 7 demande des métriques au module de tatouage numérique 43B. Le module de modélisation 8 récupère les métriques spécifiques au module de tatouage numérique 43C fournies par le module d'agrégation de métriques 7. Le module de modélisation 8 apprend alors un modèle de mise à l'échelle et un modèle de répartition de charge spécifiques au module de tatouage numérique 43C.Les exemples décrits dans les Figs. 2A, 2B et 2C montrent que l'invention permet une grande dynamicité et agilité dans la définition de la chaîne de traitement 4. Ainsi, une chaîne de traitement différente peut être définie à chaque segment. On note que la définition de la chaîne de traitement n'est pas seulement dynamique dans le choix du module de traitement candidat devant implémenter tel ou tel traitement, mais aussi en termes de choix des traitements à appliquer par cette chaîne de traitement.

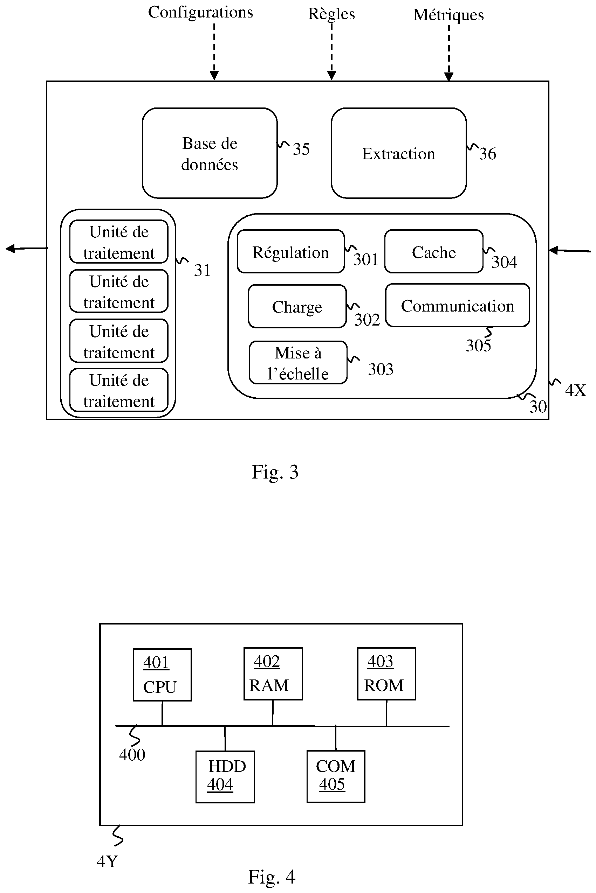

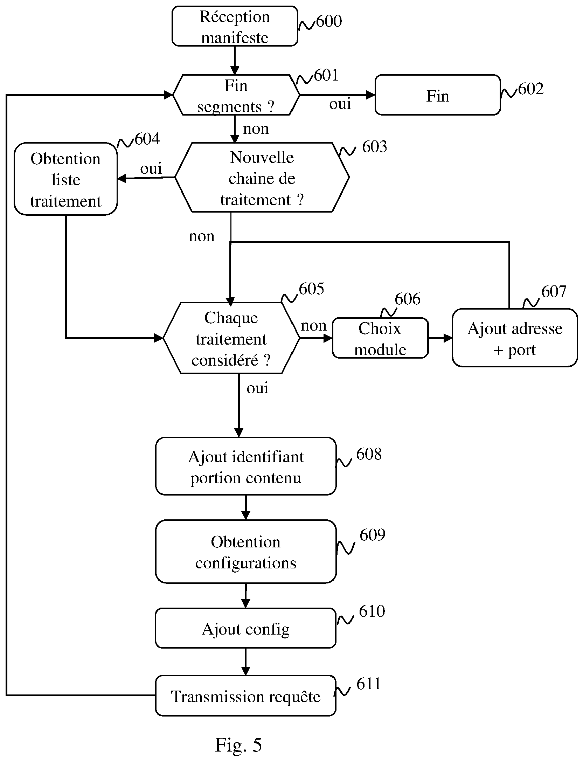

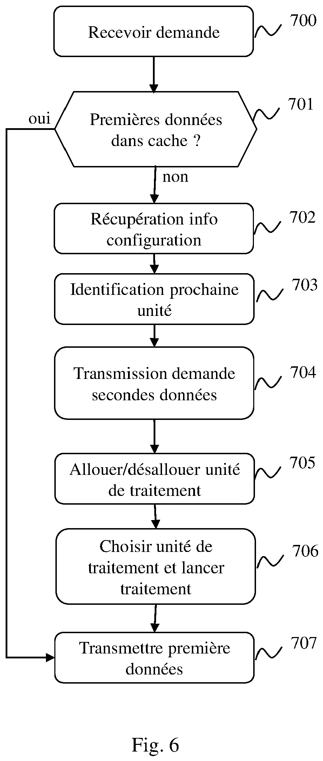

Dans un mode de réalisation, chaque module de traitement de la chaîne de traitement 4 est mis en œuvre par un module élémentaire que nous décrivons par la suite en relation avec les Figs. 3 et 4. Chaque module élémentaire met à la disposition de la chaîne de traitement 4, une ou plusieurs unités de traitement pour mettre en œuvre un module de traitement de la chaîne de traitement 4. Un rôle d'un module élémentaire en charge d'un traitement dans une chaîne de traitement est de choisir quelle ou quelles unités de traitement parmi un ensemble d'unités de traitement dont il a connaissance doit exécuter ledit traitement. Pour une chaîne de traitement donnée, aucun traitement mis en œuvre par un module élémentaire n'est exécuté par une unité de traitement définie au préalable de manière centralisée. Comme nous le montrons dans les Figs. 5 et 6 suivantes, chaque requête du terminal 1 pour un segment entraîne, pour chaque module élémentaire impliqué dans un traitement de la chaîne de traitement devant produire ce segment, une décision de mise à l'échelle et une décision de répartition de charge. De cette manière, chaque module de traitement détermine combien d'unités de traitement sont à allouer lors de la mise en œuvre de l'ensemble des traitements qui lui sont demandés (comprenant le traitement demandé dans la requête ayant entraîné la prise de décision) et comment répartir la charge de ces traitements sur les unités de traitement. D'un segment à un autre, le ou les unités de traitement sélectionnées peuvent être différentes. Pour prendre ces décisions, chaque module élémentaire s'appuie sur les modèles de mise à l'échelle et de répartition de charge correspondant au type de traitement mis en œuvre par ledit module élémentaire fourni par le module de modélisation 8.

Par ailleurs, un module élémentaire peut contribuer à plusieurs chaînes de traitement en parallèle, chaque chaîne de traitement permettant de distribuer un contenu audiovisuel stocké ou produit en direct par une source vers un terminal d'affichage. Un module élémentaire n'est donc pas monopolisé par une chaîne de traitement. A chaque traitement effectué par un module élémentaire, ledit module élémentaire génère des métriques correspondant au type de traitement que ledit module met en œuvre et qui sont récoltées régulièrement par le module d'agrégation de métriques 7.

On note que dans les Figs. 2A, 2B et 2C, nous avons représenté une chaîne de traitement 4. Les modules d'agrégation de métriques 7 et de modélisation 8 sont cependant reliés à une pluralité de chaînes de traitement. Ainsi, le module d'agrégation de métriques 7 obtient des métriques d'une pluralité de chaînes de traitement partageant ou pas des modules élémentaires. Le module de modélisation 8 génère des modèles de mise à l'échelle et de répartition de charge qui sont utilisés en parallèle dans une pluralité de chaînes de traitement. La **Fig. 5** illustre schématiquement des étapes d'un procédé permettant d'activer une chaîne de traitement afin qu'un terminal puisse obtenir un segment.

Selon un mode de réalisation, le procédé de la Fig. 5 est exécuté par le terminal 1. Le procédé de la Fig. 5 permet au terminal 1 d'activer une chaîne de traitement afin d'obtenir un segment. Dans un mode de réalisation, le segment demandé est conforme au protocole HLS et chaque transmission de données, chaque requête et chaque demande se font sous forme de transmissions de requêtes conformes au protocole HTTP/HTTPS (HTTP sécurisé « HTTP secured » en terminologie anglo-saxonne).

Préalablement à l'exécution du procédé de la Fig. 5, nous supposons que le terminal 1 a demandé un manifeste au CDN 2 concernant un contenu. Dans une étape 600, le terminal 1 reçoit une requête contenant le manifeste en provenance du CDN 2. Ce manifeste décrit chaque profil pouvant être demandé par le terminal 1.

Dans une étape 601, le terminal 1 détermine s'il doit continuer à jouer le contenu en cours ou pas, *i.e.* s'il doit demander un nouveau segment, dit *segment courant.* Cette information a été par exemple fournie par un utilisateur du terminal 1. Si le terminal 1 ne doit pas continuer à jouer le contenu, le procédé prend fin lors d'une étape 602.

Sinon, l'étape 601 est suivie d'une étape 603. Au cours de l'étape 603, le terminal 1 détermine si la chaîne de traitement 4 utilisée pour le segment précédant le segment courant doit être modifiée. En d'autres termes, est-il nécessaire d'ajouter, supprimer ou remplacer un traitement exécuté par la chaîne de traitement 4 pour obtenir le segment courant. Dans un mode de réalisation, lors de chaque changement de profil, le terminal 1 considère que la chaîne de traitement 4 doit être modifiée. Lors de l'étape 603, le terminal 1 sélectionne un profil, dit profil courant, parmi les profils du manifeste en fonction de contraintes de transmission et de traitement obtenues par le terminal 1. Les contraintes de transmission sont par exemple une contrainte de débit mesurée par le terminal 1. Les contraintes de traitement sont par exemple une capacité d'affichage (*i.e.* une résolution d'écran) du terminal 1, un nombre d'images pouvant être décodées par seconde, etc. Une fois déterminé, le profil courant est comparé au profil demandé pour le segment précédant le segment courant. Si les deux profils sont identiques, le terminal 1 exécute une étape 605. Si les deux profils sont différents ou si le segment courant est le premier segment demandé pour le contenu, le terminal 1 exécute une étape 604.

Lors de l'étape 604, le terminal 1 obtient une liste de traitements représentative de la chaîne de traitement 4 à appliquer à une portion du contenu pour obtenir le segment courant. Dans ce mode de réalisation, cette liste est déduite du profil sélectionné lors de l'étape 603. Le terminal 1 possède par exemple une table de correspondance associant chaque profil pouvant être demandé pour un contenu, à une liste de traitements.

L'étape 604 est suivie de l'étape 605. Lors de l'étape 605, le terminal 1 utilise soit la liste de traitements définie lors de l'étape 604, soit la liste de traitements correspondant à la chaîne de traitement appliquée au segment précédant le segment courant. Dans un mode de réalisation, la liste de traitements utilisée lors de l'étape 605 est une liste ordonnée dans laquelle les traitements à appliquer à la portion du contenu pour obtenir le segment courant apparaissent dans l'ordre inverse dans lequel ces traitements doivent être appliqués. Par exemple, si on reprend l'exemple de la Fig. 2A, la liste de traitements est la suivante :1. mise en paquets conformes au protocole HLS;
2. encodage conforme à la norme AVC;
3. traitement A ;
4. décodage conforme à la norme HEVC.

Lors de l'étape 605, le terminal 1 détermine si chaque traitement de la liste de traitements a été considéré. Si non, le terminal 1 parcourt la liste depuis le premier traitement à la recherche du prochain traitement non encore considéré.

Dans une étape 606, le terminal 1 choisit un module élémentaire dans un ensemble de modules aptes à exécuter ledit traitement.

Dans une étape 607, le terminal 1 ajoute un identifiant composé d'une adresse et d'un numéro de port du module élémentaire choisi dans une requête. Chaque identifiant est écrit à la suite de ou des identifiants éventuellement déjà présents dans la requête.

L'étape 607 est suivie de l'étape 605, au cours de laquelle le terminal 1 passe au traitement suivant dans la liste.

Lorsque tous les traitements de la liste ont été considérés, le terminal 1 passe à une étape 608. Lors de l'étape 608, le terminal 1 ajoute dans la requête une information représentative de la portion du contenu souhaitée. Cette information permet aussi d'identifier la source stockant ou produisant en direct ledit contenu. Dans les exemples des Figs. 2A, 2B et 2C, on considère que la source du contenu est la passerelle 5.

Dans une étape 609, le terminal 1 obtient pour chaque traitement une information représentative de paramètres de configuration du module élémentaire correspondant audit traitement, l'information représentative des paramètres de configuration ayant été obtenue à partir, notamment, du profil sélectionné lors de l'étape 603.

Dans une étape 610, le terminal 1 ajoute l'information représentative de paramètres de configuration de chaque module dans la requête.

En supposant que la chaîne de traitement à appliquer au segment courant est la chaîne de traitement 4 de la Fig. 2A, la requête comprend la séquence suivante :
http://Adresse1:port1/Adresse2:port2/Adresse3:port3/Adresse4:port4/IDportion?Conf où *Adresse1:port1* (respectivement *Adresse2:port2*, *Adresse3:port3*, *Adresse4:port4*) correspond à l'identifiant (l'adresse et le numéro de port) du module 41 (respectivement l'identifiant du module 42, du module 43 et du module 44). *IDportion* correspond à l'information représentative de la portion du contenu. *Conf* correspond à l'information représentative de paramètres de configuration de chaque module.

Dans un mode de réalisation, l'information *conf* prend la forme suivante :
Conf1=NomConf1&Conf2=NomConf2&Conf3=NomConf3&Conf4=NomConf4 où *ConfN* correspond à un identifiant d'une information représentative de paramètres de configuration d'un module élémentaire N et *NomConfN* correspond à un nom du fichier textuel, par exemple au format JSON (« JavaScript Object Notation » en terminologie anglo-saxonne) ou XML (« Extensible Markup Language » en terminologie anglo-saxonne) contenant les paramètres de configuration détaillés qu'il faudra appliquer. Dans un mode de réalisation, ces fichiers textuels sont connus de chaque module élémentaire.

Dans un autre mode de réalisation, le champ *conf* comprend explicitement chaque paramètre de configuration à appliquer à un module élémentaire.

Dans une étape 611, le terminal 1 transmet la requête au premier module élémentaire destinataire afin de lancer l'exécution de la chaîne de traitement et ainsi provoquer la transmission du segment courant au terminal 1.

On remarque que les systèmes de diffusion décrits en relation avec les Figs. 2A, 2B et 2C comprennent un CDN 2 et un serveur 3 situés entre le terminal 1 et la chaîne de traitement 4. Dans ce cas, la requête émise par le terminal 1 traverse le serveur 2 et le CDN 3 sans intervention de ceux-ci qui se contentent de la retransmettre.

On note que le procédé décrit en relation avec la Fig. 5 forme une procédure de lancement de la chaîne de traitement 4 permettant au terminal 1 d'obtenir « 1 » segment. En général, un terminal ne demande pas qu'un segment, mais un ensemble de segments successifs formant un contenu audiovisuel. Dans ce cas, le procédé de la Fig. 5 est exécuté pour chaque segment dudit contenu audiovisuel.

La **Fig. 3** illustre schématiquement un module élémentaire 4X apte à exécuter un traitement d'un type prédéfini d'une chaîne de traitement.

Le module élémentaire 4X de la Fig. 3 est par exemple un module élémentaire mettant en œuvre l'un des modules de traitement 41, 42, 43A, 43B, 43C ou 44. Si, par exemple, le module élémentaire implémente le module de traitement 41, le type de traitement mis en œuvre par le module élémentaire 4X est donc une mise en paquets conforme au protocole HLS.

Le module élémentaire 4X comprend une pluralité variable d'unités de traitement 31 disponibles pour exécuter le traitement du type prédéfini, le module élémentaire 4X obtenant régulièrement une information représentative de chaque unité de traitement ajoutée ou supprimée de la pluralité. Chaque unité de traitement de la pluralité est dite sans état, c'est-à-dire qu'elle ne conserve aucune information concernant un traitement une fois le traitement effectué. Un avantage d'une unité de traitement sans état est qu'elle peut facilement passer d'un traitement à un autre sans que les traitements successifs concernent un même contenu, une même chaîne de traitement ou un même terminal.

Le module élémentaire 4X comprend de plus, un module central, comprenant un module de communication 305, un module de mise à l'échelle 303 et un module de répartition de charge 302 et une base de données 35.

Le module de communication 305 est apte à recevoir des demandes de premières données. Une demande de premières données est par exemple la requête transmise par le terminal 1 lors de l'étape 611 lorsque le module élémentaire 4X met en œuvre le module de traitement 41. Lorsque le module élémentaire met en œuvre le module de traitement 42 (respectivement 43 ou 44), une demande de premières données correspond à la requête transmise par le terminal 1 lors de l'étape 611 modifiée par le module élémentaire mettant en œuvre le module de traitement 41 (respectivement par les modules élémentaires mettant en œuvre les modules de traitement 41 et 42 ou par les modules élémentaires mettant en œuvre les modules de traitement 41, 42 et 43) selon une procédure de modification décrite en relation avec la Fig. 6. Dans le cas où le module élémentaire 4X met en œuvre le module de traitement 41, les premières données correspondent au segment courant puisque le module 41 est le dernier module de la chaîne de traitement. La requête générée par le terminal 1 demande donc le segment courant au module élémentaire 4X. Lorsque le module élémentaire 4X met en œuvre le module de traitement 42 (respectivement 43 ou 44), les premières données sont un résultat des traitements de la portion de contenu correspondant à l'identifiant *IDportion* par les modules de traitement 43 et 44 (respectivement du traitement de ladite portion de contenu par le module de traitement 44 ou ladite portion de contenu).

Comme nous l'avons vu plus haut, cette demande de premières données comprend une information représentative d'une chaîne de traitement à appliquer à la portion de contenu correspondant à l'identifiant *IDportion* afin d'obtenir les premières données et une information représentative de paramètres de configuration à appliquer à au moins une unité de traitement dudit module élémentaire pour générer les premières données. Dans le cas où le module élémentaire 4X met en œuvre le module de traitement 41, l'information représentative de la chaîne de traitement *(i.e.* la séquence Adresse1:port1/Adresse2:port2/Adresse3:port3/Adresse4:port4) décrit toute la chaîne de traitement. Lorsque le module élémentaire met en œuvre le module de traitement 42 (respectivement 43 ou 44), l'information représentative de la chaîne de traitement décrit la chaîne de traitement jusqu'au module de traitement 42 (*i.e.* Adresse2:port2/Adresse3:port3/Adresse4:port4) (respectivement jusqu'au module 43 (Adresse3:port3/Adresse4:port4) ou 44 (Adresse4:port4)).

Le module de communication 305 est de plus apte à transmettre une demande de secondes données à la source 5 ou à une unité précédant le module élémentaire 4X dans la chaîne de traitement 4 déterminée à partir de l'information représentative de la chaîne de traitement. Lorsque le module élémentaire 4X met en œuvre le module de traitement 41, l'unité précédant le module élémentaire 4X est un module élémentaire mettant en œuvre le module de traitement 42. Les secondes données correspondent à un résultat d'une application des modules de traitement 42, 43 et 44 à la portion de contenu correspondant à l'identifiant *IDportion.* Lorsque le module élémentaire 4X met en œuvre le module de traitement 42, l'unité précédant le module élémentaire 4X est un module élémentaire mettant en œuvre le module de traitement 43. Les secondes données correspondent au résultat d'une application des modules de traitement 43 et 44 à la portion de contenu correspondant à l'identifiant *IDportion.* Lorsque le module élémentaire 4X met en œuvre le module de traitement 43, l'unité précédant le module élémentaire 4X est un module élémentaire mettant en œuvre le module de traitement 44. Les secondes données correspondent au résultat d'une application du module de traitement 44 à la portion de contenu correspondant à l'identifiant *IDportion.* Lorsque le module élémentaire 4X met en œuvre le module de traitement 44, l'unité précédant le module élémentaire 4X est la source 5. Les secondes données correspondent à la portion de contenu correspondant à l'identifiant *IDportion.*

Le module de communication 305 est en outre apte à transmettre les premières données demandées à l'unité ayant émis la demande pour lesdites premières données. Lorsque le module élémentaire 4X met en œuvre le module de traitement 41, l'unité ayant émis la demande est le terminal 1. Lorsque le module élémentaire 4X met en œuvre le module de traitement 42, l'unité ayant émis la demande est le module élémentaire mettant en œuvre le module de traitement 41. Lorsque le module élémentaire 4X met en œuvre le module de traitement 43, l'unité ayant émis la demande est le module élémentaire mettant en œuvre le module de traitement 42. Lorsque le module élémentaire 4X met en œuvre le module de traitement 44, l'unité ayant émis la demande est le module élémentaire mettant en œuvre le module de traitement 43.

Dans un mode de réalisation, le module de communication 305 est un serveur WEB.

Le module de mise à l'échelle 303 détermine un nombre d'unités de traitement à allouer pour la mise en œuvre de l'ensemble des traitements demandés au module élémentaire 4X. La détermination du nombre d'unités de traitement à allouer s'appuie sur le modèle de mise à l'échelle correspondant au traitement du type prédéfini fourni par le module de modélisation 8. En fonction du nombre d'unités de traitement à allouer déterminé, le module de mise à l'échelle 303 alloue des unités de traitement disponibles ou désalloue des unités de traitement, en prenant en compte les unités de traitement déjà allouées.

Le module de répartition de charge 302 est apte à choisir pour chaque demande reçue au moins une unité de traitement parmi les unités de traitement allouées par le module de mise à l'échelle 303 et apte à lancer le traitement du type prédéfini par chaque unité de traitement choisie afin d'obtenir les premières données demandées à partir des deuxièmes données. Le choix des unités de traitement à utiliser s'appuie sur le modèle de répartition de charge fourni par le module de modélisation 8. Dans un mode de réalisation, la base de données 35 est destinée à stocker des fichiers textuels, par exemple au format JSON ou XML contenant chacun des paramètres de configuration détaillés correspondant aux informations représentatives des paramètres de configuration *NomConfN* contenues dans les demandes de premières données.

Dans un mode de réalisation, la base de données 35 stocke aussi des fichiers textuels qui ne correspondent pas directement aux profils demandés par des terminaux, mais à des profils dits contraints contenant des paramètres de configuration contraints fixés par une entité externe indépendamment d'une demande de premières données. Ces paramètres de configuration contraints sont par exemple des paramètres imposés par un opérateur qui n'apparaissent pas dans un profil. Par exemple, ces paramètres peuvent forcer un encodeur vidéo à fonctionner avec un nombre d'outils de compression restreint.

Dans un mode de réalisation, le module central 30 comprend une mémoire cache 304 utilisée pour conserver temporairement, selon un procédé de gestion de mémoire cache prédéfini mis en œuvre par un module de gestion de cache, des premières données générées par le module élémentaire 4X. Le procédé de gestion de la mémoire cache peut consister simplement à conserver dans la mémoire cache 304 chaque première donnée pendant une durée prédéfinie et d'effacer ces premières données après cette durée prédéfinie. Dans un mode de réalisation, le module de gestion de cache peut calculer des statistiques sur les contenus demandés et ajuster la durée de conservation des premières données en fonction de ces statistiques. Par exemple, le procédé de gestion de la mémoire cache 304 peut consister à augmenter la durée prédéfinie de conservation pour les premières données correspondant à des contenus très demandés et à diminuer la durée de conservation pour les premières données correspondant aux contenus peu demandés. Dans un mode de réalisation, le module de communication 305 met en œuvre le procédé de gestion de la mémoire cache 304. Dans ce cas, le module élémentaire 4X ne comprend pas de module de gestion de cache.

Dans un mode de réalisation, le module élémentaire 4X comprend un module d'extraction 36 apte à extraire l'information représentative des paramètres de configuration de chaque demande de premières données reçues par le module élémentaire 4X.

Dans un mode de réalisation, le module central 30 comprend un module de régulation 301 fournissant des règles de gestion. Ces règles de gestion sont par exemple, des règles de gestion de cache prises en compte dans la procédure de gestion de la mémoire cache 304, des règles d'allocation d'unités de traitement destinées au module de mise à l'échelle 303 et des règles de répartition de charge destinées au module de répartition de charge 302. Le module de régulation 301 stocke des règles de gestion prédéfinies et/ou reçoit des règles de gestion d'une entité extérieure. Les règles de gestion de cache fixent par exemple la durée de conservation des premières données dans la mémoire cache 304. Les règles d'allocation fixent par exemple quelles unités de traitement doivent être allouées ou désallouées en priorité en fonction de critères de capacité calculatoire, de consommation d'énergie ou de coût financier d'utilisation de chaque unité de traitement. Les règles de gestion de charge peuvent par exemple fixer quand une unité de traitement est considérée comme surchargée et qu'elle ne doit plus être sollicitée pour de nouveaux traitements.

Dans un mode de réalisation, les modules 30, 301, 302, 303, 305 et 36, la base de données 35, et la mémoire cache 304 sont compris dans un seul équipement 4Y et reliés entre eux par un bus de communication. Les unités de traitement de la pluralité 31 sont comprises dans l'équipement 4Y ou comprises dans d'autres équipements reliés à l'équipement 4Y par un réseau de communication.

La **Fig. 4** illustre un exemple d'architecture matérielle d'un équipement 4Y utilisé dans le cadre de l'invention. Dans l'exemple de la Fig. 4, l'équipement 4Y implémente les modules 30, 301, 302, 303, 305 et 36, la base de données 35, et la mémoire cache 304 et comprend certaines unités de traitement de la pluralité 31.

L'équipement 4Y comprend alors, reliés par un bus de communication 400: une pluralité d'unités de traitement 401; une mémoire vive RAM 402; une mémoire morte ROM 403; une unité de stockage ou un lecteur de support de stockage, tel qu'un lecteur de cartes SD 404; un ensemble d'interfaces de communication 405 permettant à l'équipement 4Y de communiquer avec d'autres unités de la chaîne de traitement, *i*.*e*. avec d'autres modules élémentaires, avec la source 5, le terminal 1 et avec d'autres équipements. Dans un mode de réalisation, l'unité de stockage 404 stocke la base de données 35 et la mémoire cache 304.

Chaque unité de traitement de la pluralité 401 est capable d'exécuter des instructions chargées dans la RAM 402 à partir de la ROM 403, d'une mémoire externe (non représentée), d'un support de stockage, tel qu'une carte SD, ou d'un réseau de communication. Lorsque l'équipement 4Y est mis sous tension, chaque unité de traitement de la pluralité 401 est capable de lire de la RAM 402 des instructions et de les exécuter. Chaque module du module élémentaire 4X, le traitement du type prédéfini mis en œuvre par le module élémentaire 4X et le procédé décrit par la suite en relation avec la Fig. 6 est représenté sous forme d'instructions formant un programme d'ordinateur. Lorsqu'une ou plusieurs unités de traitement chargent un programme d'ordinateur correspondant à un module (respectivement à un traitement ou au procédé décrit en relation avec la Fig. 6) il met en œuvre ledit module (respectivement ledit traitement ou ledit procédé).

Dans un mode de réalisation, chaque unité de traitement de la pluralité est un processeur physique (ou logique mis en œuvre par un processeur physique), un microcontrôleur ou un DSP (« Digital Signal Processor » en terminologie anglo-saxonne) chargeant l'un des programmes d'ordinateur.

Toutefois, dans un mode de réalisation, tout ou partie des modules, le traitement du type prédéfini ou le procédé décrit en relation avec la Fig. 6 peuvent être implémentés sous forme matérielle par une machine ou un composant dédié, tel qu'un FPGA (« Field-Programmable Gate Array » en terminologie anglo-saxonne) ou un ASIC (« Application-Specific Integrated Circuit » en terminologie anglo-saxonne).

Dans un mode de réalisation, les modules du module élémentaire 4X, la base de données 35, et la mémoire cache 304 sont dispersés totalement ou partiellement sur des équipements différents, et reliés entre eux par un bus de communication lorsqu'ils sont sur un même équipement ou par un réseau de communication lorsqu'ils sont sur des équipements différents.

Par la suite, en relation avec la Fig. 6, nous décrivons comment un module élémentaire gère une réception d'une demande de premières données.

La **Fig. 6** illustre schématiquement un procédé exécuté par un module élémentaire lors d'une réception d'une ou plusieurs demandes de premières données.

Dans une étape 700, le module de communication 305 du module élémentaire 4X reçoit une demande de premières données. Comme nous l'avons vu plus haut, lorsque le module élémentaire 4X met en œuvre le module de traitement 41, la demande de premières données correspond à la requête transmise par le terminal 1 lors de l'étape 611. Toutefois, le module de communication 305 du module élémentaire 4X peut recevoir plusieurs demandes de premières données quasiment simultanément. Par exemple, lorsque le module élémentaire 4X met en œuvre le module de traitement 41, le module de communication 305 peut recevoir plusieurs demandes de premières données de plusieurs terminaux. Par ailleurs, le module élémentaire 4X peut aussi être en cours de traitement d'une ou plusieurs demandes de premières données.

Dans une étape 701, le module de communication 305 du module élémentaire 4X vérifie pour chaque demande de premières données reçue, une présence desdites premières données dans la mémoire cache 304. Lorsque, pour une demande de premières données, les premières données sont absentes de la mémoire cache, dans un mode de réalisation, le module d'extraction 36 extrait lors d'une étape 702 l'information représentative des paramètres de configuration de ladite demande de premières données. Le module élémentaire 4X n'ayant pas les premières données à sa disposition, il doit les demander. Pour ce faire, le module de communication 305 transmet lors d'une étape 704 une demande de secondes données à la passerelle 5 ou à une unité précédant le module élémentaire 4X dans la chaîne de traitement 4. Le module détermine lors d'une étape 703 à qui il doit transmettre la demande de secondes données à partir de l'information représentative de la chaîne de traitement. Dans le mode de réalisation décrit en relation avec les Figs. 2A, 3, 4, l'unité précédant le module élémentaire 4X dans la chaîne de traitement 4 est soit la passerelle 5, soit un module élémentaire. Si le module élémentaire 4X met en œuvre le module de traitement 41, le module élémentaire précédant le module élémentaire 4X dans la chaîne de traitement 4 est un module élémentaire mettant en œuvre le module de traitement 42. Comme nous l'avons vu plus haut, la demande de secondes données correspond à une version modifiée de la demande de premières données. Lors de la modification, le module de communication supprime l'identifiant du module élémentaire 4X de la demande de premières données. Ainsi, si le module élémentaire 4X met en œuvre le module de traitement 41, la demande de premières données comprend la séquence suivante :
http://Adresse1:port1/Adresse2:port2/Adresse3:port3/Adresse4:port4/IDportion?Conf et devient :
http://Adresse2:port2/Adresse3:port3/Adresse4:port4/IDportion?Conf une fois modifiée pour obtenir la demande de secondes données.

Dans une étape 705, le module de mise à l'échelle 303 détermine un nombre *NU* d'unités de traitement à allouer pour exécuter chaque traitement demandé dans chaque demande de premières données reçue pour laquelle les premières données sont absentes de la mémoire cache 304. Pour ce faire, le module de mise à l'échelle 303 injecte des métriques dans le modèle de mise à l'échelle correspondant au traitement du type prédéfini. Ces métriques comprennent notamment les paramètres de configuration de ces demandes de premières données correspondant au traitement du type prédéfini, des caractéristiques du traitement prédéfini tel qu'implémenté par le module élémentaire 4X, et des caractéristiques des secondes données à traiter. Par exemple, pour le module d'encodage 42, les paramètres de configuration d'une demande de premières données, c'est-à-dire correspondant à des données encodées, comprennent les paramètres suivants utilisés aussi pour l'entraînement du modèle de mise à l'échelle correspondant au module d'encodage 42 : *Codec_id, Codec_implementation_id*, *Video_profile*, *Video_level*, *Output_bitrate*, *Output_width*, *Output_Height*, *Output_FrameRate*, *Quality_Level*, *Segment_duration* et *GopSize.* Des caractéristiques de l'encodage tel qu'implémenté par le module d'encodage 42 comprennent par exemple une information indiquant si l'implémentation de l'encodage comprend des processus parallélisables et si oui, combien de processus peuvent être parallélisés. Des caractéristiques des secondes données à traiter, c'est-à-dire des données à encoder pour le module d'encodage 42, comprennent par exemple, le paramètre *Segment_complexity* utilisé aussi lors de l'entraînement. Suite à la détermination du nombre d'unités de traitement à allouer *NU,* le module de mise à l'échelle 303 compare le nombre *NU* à un nombre d'unités de traitement déjà allouées disponibles NAA. Si *NU>NAA,* le module de mise à l'échelle 303 alloue un nombre d'unités de traitement égal à *NU-NAA.* Les unités de traitement préalablement allouées restent allouées. Si *NU<NAA*, le module de mise à l'échelle 303 désalloue un nombre d'unités de traitement égal à *NAA-NU* parmi les unités de traitement préalablement allouées. Si *NU=NAA,* le nombre d'unités de traitement allouées reste inchangé. On note que le modèle de mise à l'échelle utilisé par le module élémentaire 4X est défini de manière à ce que le module élémentaire 4X ait toujours un nombre suffisant d'unités de traitement disponibles. L'objectif est que le module élémentaire 4X ne se retrouve jamais en situation de surcharge, ce qui impliquerait des délais de traitement des demandes de premières données inacceptables. Le nombre d'unités de traitement à allouer *NU* ne correspond donc pas seulement à un nombre NR d'unités de traitement nécessaires à la mise en œuvre de l'ensemble des traitements demandés au module élémentaire 4X, mais correspond à la somme du nombre *NR* et d'une marge de sécurité MS permettant de supporter des augmentations rapides du nombre de demandes de premières données. L'algorithme d'apprentissage profond est défini de manière à trouver un meilleur compromis entre nécessité de définir une marge de sécurité *MS* suffisante pour éviter les surcharges et nécessité de ne pas allouer un nombre d'unités de traitement démesuré, ce qui peut augmenter un coût d'exploitation du système de distribution de contenus audiovisuels. Par exemple, pour le modèle de mise à l'échelle correspondant au module d'encodage 42, les paramètres suivants, utilisés lors de l'entraînement dudit modèle, permettent d'ajuster les paramètres dudit modèle afin d'atteindre l'objectif d'évitement de surcharge des unités de traitement allouées : *Unit_type_id*, *vCpu_type_id*, *vCpu_Frequency*, *VCpu_Cores*, *Unit_vCpu_count*, *Memory_size* et *VRTR.* En effet, chaque paramètre *RealTimeRatio* est un bon indicateur pour déterminer si un CPU, dont on connaît les caractéristiques, est surchargé, ou pas lorsqu'il doit exécuter un traitement dont on connaît les caractéristiques. Les paramètres du modèle de mise à l'échelle *(i.e.* du réseau de neurones correspondant au modèle de mise à l'échelle) s'ajusteront par entraînement de manière à éviter les surcharges de CPU.

Dans une étape 706, le module de répartition de charge 302 choisit pour chaque demande de premières données au moins une unité de traitement parmi les unités de traitement allouées pour exécuter le traitement du type prédéfini. Dans un mode de réalisation, chaque unité de traitement allouée est associée à une liste de demandes de premières données qui lui a été affectée. Lors d'une réception d'une ou plusieurs nouvelles demandes de premières données pour lesquelles les premières données ne sont pas présentes dans la mémoire cache, le module de répartition de charge 302 doit déterminer dans quelles listes doivent être insérées lesdites nouvelles demandes. Pour ce faire, le module de répartition de charge 302 injecte des métriques dans le modèle de répartition de charge correspondant au traitement du type prédéfini. Ces métriques comprennent les paramètres de configuration des nouvelles demandes correspondant au traitement du type prédéfini, des caractéristiques du traitement prédéfini tel qu'implémenté par le module élémentaire 4X, des caractéristiques des secondes données à traiter, des caractéristiques des unités de traitement allouées et pour chaque unité de traitement allouée, les paramètres de configuration correspondant au traitement du type prédéfini des demandes de premières données déjà présentes dans la liste associée à ladite unité de traitement.

Par exemple, pour le module d'encodage 42, les paramètres de configuration des nouvelles demandes ou des demandes déjà présentes dans une liste associée à une des unités de traitement allouées correspondant au traitement du type prédéfini, c'est-à-dire correspondant à des données encodées, comprennent les paramètres suivants : *Codec_id*, *Codec_implementation_id*, *Video_profile*, *Video_level*, *Output_bitrate*, *Output_width*, *Output_Height*, *Output_FrameRate*, *Quality_Level*, *Segment_duration* et *GopSize.* Des caractéristiques de l'encodage tel qu'implémenté par le module d'encodage 42 comprennent par exemple une information indiquant si l'implémentation de l'encodage comprend des processus parallélisables et si oui, combien de processus peuvent être parallélisés. Des caractéristiques des secondes données à traiter, c'est-à-dire des données à encoder pour le module d'encodage 42, comprennent par exemple, le paramètre *Segment_complexity*. Des caractéristiques des unités de traitement allouées comprennent par exemple un type de CPU, un type de CPU virtuel, une fréquence de CPU, un nombre de cœurs dans le CPU, un nombre de CPU virtuels, une taille de mémoire RAM.

Le modèle de répartition de charge fournit alors une information représentative d'une répartition des nouvelles demandes de premières données dans les listes associées aux unités de traitement allouées. Chaque unité de traitement traite les demandes de premières données qui lui ont été affectées dans leur ordre d'apparition dans la liste associée à ladite unité de traitement. Pour chaque demande de premières données, l'unité de traitement concernée attend la réception des secondes données correspondant auxdites premières données demandées lors de l'étape 704 pour pouvoir appliquer le traitement du type prédéfini sur lesdites deuxièmes données afin d'obtenir lesdites premières données. On note que, dans un mode de réalisation, pour chaque demande de première données, le module de répartition de charge interroge la base de données 35 avec l'information représentative des paramètres de configuration extraite de ladite demande de premières données par le module d'extraction 36 pour obtenir les paramètres de configuration correspondant à ladite demande de premières données.

L'étape 706 et l'étape 701 sont suivies d'une étape 707 au cours de laquelle, pour chaque demande de premières données, le module de communication 305 transmet les premières données lorsqu'elles sont disponibles à l'unité ayant émis la demande pour lesdites premières données. L'unité ayant émis la demande pour lesdites premières données est soit le terminal 1 (lorsque le module élémentaire 4X met en œuvre le module de traitement 41), soit un module élémentaire (lorsque le module élémentaire 4X met en œuvre le module de traitement 42 ou 43 ou 44).

Dans un mode de réalisation, le module d'extraction 36 extrait chaque information représentative de paramètres de configuration de chaque demande de premières données et stocke cette information dans la base de données 35. Chaque unité de traitement de la pluralité 31 devant exécuter un traitement interroge la base de données 35 pour obtenir ladite information et retrouver ensuite les paramètres de configuration correspondant à cette information. Chaque information représentative de paramètres de configuration ainsi stockée fait partie des métriques fournies au module d'extraction de métriques 7.

Dans un mode de réalisation, la procédure de lancement de la chaîne de traitement est exécutée par le CDN 2 ou le serveur 3. Dans ce cas, pour chaque segment, le terminal 1 transmet une requête par exemple conforme au protocole HLS pour obtenir ledit segment et le CDN 2 ou le serveur 3 traduit cette requête en une requête conforme à l'invention telle que par exemple décrite en relation avec l'étape 610.

Dans un mode de réalisation, la procédure de lancement de la chaîne de traitement est exécutée par le CDN 2 indépendamment de toute requête d'un terminal. Dans ce mode de réalisation, le CDN 2 anticipe des demandes à venir émanant de clients. Les segments ainsi obtenus sont conservés au moins temporairement par le CDN 2.

Dans un mode de réalisation, chaque unité de traitement de la pluralité disponible pour effectuer un traitement du type prédéfini correspondant à un module élémentaire 4X s'enregistre auprès d'une unité telle qu'un serveur, dit serveur d'enregistrement, avec lequel chaque module élémentaire peut communiquer en utilisant un réseau de communication. Dans ce cas, par exemple à intervalles réguliers, chaque module élémentaire interroge le serveur d'enregistrement afin d'obtenir la liste des unités de traitement qu'il pourrait utiliser. Dans ce mode de réalisation, dès qu'un module élémentaire alloue une unité de traitement de la liste conservée par le serveur d'enregistrement, il en informe le serveur d'enregistrement qui supprime cette unité de traitement de la liste.

## Revendications

1. Module élémentaire destiné à être utilisé dans au moins une chaîne de traitement d'un système permettant de distribuer des contenus audiovisuels stockés ou produits en direct par des sources vers des terminaux d'affichage, chaque contenu étant reçu par un terminal sous forme d'une succession de fichiers consécutifs, appelés segments, chaque segment étant distribué à un terminal suite à une transmission d'une requête par ledit terminal et étant obtenu par une application d'une chaîne de traitement à une portion d'un contenu, le module élémentaire exécutant un traitement d'un type prédéfini de la chaîne de traitement, **caractérisé en ce que** le module élémentaire comprend :
une pluralité variable d'unités de traitement disponibles pour exécuter le traitement du type prédéfini, le module élémentaire obtenant régulièrement une information représentative de chaque unité de traitement ajoutée ou supprimée de la pluralité, chaque unité de traitement ne conservant aucune information concernant un traitement une fois le traitement effectué;
un module, dit module central, comprenant un module de communication apte à recevoir des demandes de premières données, chaque demande comprenant une information représentative d'une chaîne de traitement à appliquer à une portion d'un contenu correspondant à un segment demandé dans une requête par un terminal pour obtenir lesdites premières données et une information représentative de paramètres de configuration à appliquer à au moins une unité de traitement dudit module élémentaire pour générer les premières données, chaque unité de traitement prenant en compte l'information représentative des paramètres de configuration comprise dans une demande de première données pour effectuer un traitement correspondant à ladite demande de premières données; apte à transmettre une demande de secondes données à à une unité précédant le module élémentaire dans la chaîne de traitement déterminée à partir de l'information représentative de la chaîne de traitement, lesdites secondes données correspondant à ladite portion traitée ou pas par une ou plusieurs unités précédant le module élémentaire dans la chaîne de traitement ; et, apte à transmettre des premières données lorsqu'elles sont disponibles à une unité ayant émis une demande pour lesdites premières données ;
un module de mise à l'échelle (303), apte à déterminer un nombre d'unités de traitement à allouer pour une mise en œuvre d'un ensemble des traitements demandés au module élémentaire dans des demandes de premières données, la détermination dudit nombre s'appuyant sur un modèle de mise à l'échelle correspondant au traitement du type prédéfini fourni par un module de modélisation (8) compris dans ledit système ; et,
un module de répartition de charge (302) apte à choisir pour chaque demande reçue au moins une unité de traitement parmi des unités de traitement allouées par le module de mise à l'échelle pour traiter des secondes données afin d'obtenir des premières données demandées et lançant le traitement du type prédéfini par chaque unité de traitement choisie, le choix des unités de traitement s'appuyant sur un modèle de répartition de charge fourni par ledit module de modélisation (8) ;
chaque modèle étant un réseau de neurones de type à apprentissage profond, entraîné par le module de modélisation (8) en cours de fonctionnement dudit système à partir de métriques obtenues par un module d'agrégation de métriques (7) compris dans ledit système, lesdites métriques étant fournies par chaque module élémentaire dudit système exécutant le traitement du type prédéfini, lesdites métriques étant représentatives d'un fonctionnement de chaque module élémentaire dudit système exécutant le traitement du type prédéfini.

2. Module élémentaire selon la revendication 1, **caractérisé en ce que** chaque modèle est un réseau de neurones hybrides dans lequel un réseau de neurones de type réseau de neurones convolutif, dit réseau de neurones CNN, est suivi d'un réseau de neurones de type à longue mémoire à court-terme, dit réseau de neurones LSTM, puis d'un réseau de neurones de type perceptron multi-niveaux, dit réseau de neurones MLP.

3. Système de distribution de contenus audiovisuels stockés ou produits en direct par des sources vers des terminaux d'affichage, chaque contenu étant reçu par un terminal sous forme d'une succession de fichiers consécutifs, appelés segments, chaque segment étant distribué à un terminal suite à une transmission d'une requête par ledit terminal et étant obtenu par une application d'une chaîne de traitement à une portion d'un contenu, **caractérisé en ce que** :
au moins une chaîne de traitement mise en œuvre par le système de distribution comprend au moins un module élémentaire selon les revendications 1 ou 2 apte à mettre en œuvre un traitement d'un type de traitement prédéfini,
et ledit système comprend en outre :
un module d'agrégation de métriques (7) en charge d'obtenir régulièrement des métriques de chacun des modules élémentaires dudit système et, pour chaque type de traitement prédéfini, d'agréger les métriques obtenues de chaque module de traitement dudit système mettant en œuvre ledit type de traitement prédéfini ; et,
un module de modélisation (8) récupérant les métriques spécifiques à chaque type de traitement prédéfini fournies par le module d'agrégation de métriques (7) et, à partir de ces métriques, définissant, pour chacun desdits types de traitement prédéfini, un modèle de mise à l'échelle et un modèle de répartition de charge spécifique audit type de traitement prédéfini.

4. Système selon la revendication 3 **caractérisé en ce que** la définition par entraînement des modèles de mise à l'échelle et de répartition de charge est effectuée de manière asynchrone par rapport au fonctionnement de chaque chaîne de traitement comprenant au moins un module élémentaire mise en œuvre par ledit système.

5. Procédé de traitement exécuté par un module élémentaire exécutant un type de traitement prédéfini dans au moins une chaîne de traitement d'un système de distribution de contenus audiovisuels stockés ou produits en direct par des sources vers des terminaux d'affichage, chaque distribution de contenus se faisant sous forme de fichiers, appelés segments, chaque segment distribué à un terminal ayant fait l'objet d'une requête transmise par ledit terminal et résultant d'une application d'une chaîne de traitement à une portion de contenu demandée par la requête, **caractérisé en ce que** procédé comprend :
recevoir (700) au moins une demande de premières données, chaque demande comprenant une information représentative d'une chaîne de traitement à appliquer à une portion d'un contenu correspondant à un segment demandé dans une requête par un terminal pour obtenir lesdites premières données et une information représentative de paramètres de configuration à appliquer à au moins une unité de traitement pour générer les premières données;
pour chacune desdites demandes, extraire (702) l'information représentative des paramètres de configuration contenus dans ladite demande et (703, 704) transmettre une demande de secondes données à une source ou à une unité précédant le module élémentaire dans la chaîne de traitement déterminée à partir de l'information représentative de la chaîne de traitement, lesdites secondes données correspondant à ladite portion traitée ou pas par une ou plusieurs unités précédant le module élémentaire dans la chaîne de traitement ;
déterminer (705) un nombre d'unités de traitement à allouer pour exécuter chaque traitement demandé dans chaque demande de premières données reçue en utilisant un modèle de mise à l'échelle correspondant au traitement du type prédéfini fourni par un module de modélisation (8) compris dans ledit système, chaque unité de traitement appartenant à une pluralité d'unités de traitement disponibles pour exécuter le traitement du type prédéfini, le module élémentaire obtenant régulièrement une information représentative de chaque unité de traitement ajoutée ou supprimée de ladite pluralité, et allouer ou désallouer des unités de traitement disponibles en prenant en compte un nombre d'unités de traitement déjà allouées disponibles ;
choisir (706) pour chaque demande au moins une unité de traitement parmi les unités de traitement allouées en utilisant un modèle de répartition de charge fourni par le module de modélisation et activer chaque unité de traitement choisie afin qu'elle applique le type de traitement prédéfini sur les secondes données à réception des secondes données, chaque unité de traitement prenant en compte l'information représentative des paramètres de configuration correspondant au traitement qu'elle doit exécuter,
chaque modèle étant un réseau de neurones de type à apprentissage profond, entraîné par le module de modélisation (8) en cours de fonctionnement dudit système à partir de métriques obtenues par un module d'agrégation de métriques (7) compris dans ledit système, lesdites métriques étant fournies par chaque module élémentaire dudit système exécutant le traitement du type prédéfini, lesdites métriques étant représentatives d'un fonctionnement de chaque module élémentaire dudit système exécutant le traitement du type prédéfini ; et,
pour chaque demande, transmettre (707) les premières données lorsqu'elles sont disponibles à une unité ayant émis la demande pour lesdites premières données ; chaque unité de traitement ne conservant aucune information concernant un traitement une fois le traitement effectué.

6. Procédé selon la revendication 5, **caractérisé en ce que** l'entraînement des modèles de mise à l'échelle et de répartition de charge est effectué de manière asynchrone par rapport au fonctionnement de chaque chaîne de traitement comprenant le module élémentaire.

7. Procédé selon la revendication 5 ou 6, **caractérisé en ce que** l'entraînement de chaque modèle utilise un jeu de caractéristiques prenant la forme d'un vecteur de paramètres, certains paramètres étant eux-mêmes des vecteurs.

8. Procédé selon la revendication 7, **caractérisé en ce que** le jeu de caractéristiques utilisé pour l'entraînement du modèle de mise à l'échelle comprend des caractéristiques permettant d'ajuster des paramètres dudit modèle afin d'atteindre un objectif d'évitement de surcharge des unités de traitement allouées.

9. Produit programme d'ordinateur, **caractérisé en ce qu'**il comporte des instructions pour mettre en œuvre, par un dispositif, le procédé selon la revendication 5, 6, 7 ou 8 par un processeur du dispositif.

10. Moyens de stockage, **caractérisés en ce qu'**ils stockent un programme d'ordinateur comportant des instructions pour mettre en œuvre, par un dispositif, le procédé selon la revendication 5, 6, 7 ou 8 lorsque ledit programme est exécuté par un processeur dudit dispositif.

## Patentansprüche

1. Elementarmodul zur Verwendung in wenigstens einer Verarbeitungskette eines Systems, das es gestattet, gespeicherte oder von Quellen direkt erzeugte audiovisuelle Inhalte an Anzeigeendgeräte zu verteilen, wobei jeder Inhalt von einem Endgerät in Form einer Folge aufeinanderfolgender Dateien empfangen wird, die Segmente genannt werden, wobei jedes Segment an ein Endgerät nach einer Übertragung einer Anfrage durch das Endgerät verteilt und durch eine Anwendung einer Verarbeitungskette auf einen Abschnitt eines Inhalts erhalten wird, wobei das Elementarmodul eine Verarbeitung eines vorgegebenen Typs der Verarbeitungskette ausführt, **dadurch gekennzeichnet, dass** das Elementarmodul Folgendes umfasst:
eine variable Mehrzahl von Verarbeitungseinheiten, die dafür verfügbar sind, die Verarbeitung vom vorgegebenen Typ auszuführen, wobei das Elementarmodul regelmäßig eine Information bezieht, die für jede Verarbeitungseinheit repräsentativ ist, die hinzugefügt oder von der Mehrzahl gelöscht wird, wobei jede Verarbeitungseinheit keine Information bezüglich einer Verarbeitung behält, sobald die Verarbeitung durchgeführt ist;
ein Modul, Zentralmodul genannt, das ein Kommunikationsmodul umfasst, das geeignet ist, Anforderungen erster Daten zu empfangen, wobei jede Anforderung eine Information, die für eine Verarbeitungskette repräsentativ ist, die auf einen Abschnitt eines Inhalts anzuwenden ist, der einem Segment entspricht, das in einer Anfrage durch ein Endgerät angefordert wird, um die ersten Daten zu beziehen, und eine Information, die für Konfigurationsparameter repräsentativ ist, die auf wenigstens eine Verarbeitungseinheit des Elementarmoduls anzuwenden sind, um die ersten Daten zu erzeugen, umfasst, wobei jede Verarbeitungseinheit die Information berücksichtigt, die für die Konfigurationsparameter repräsentativ ist, die in einer Anforderung erster Daten enthalten ist, um eine Verarbeitung durchzuführen, die der Anforderung erster Daten entspricht; das geeignet ist, eine Anforderung zweiter Daten an eine Einheit zu übertragen, die dem Elementarmodul in der Verarbeitungskette vorangeht, die anhand der Information bestimmt wird, die für die Verarbeitungskette repräsentativ ist, wobei die zweiten Daten dem Abschnitt entsprechen, der von einer oder mehreren Einheiten, die dem Elementarmodul in der Verarbeitungskette vorangehen, verarbeitet wird oder nicht; und geeignet ist, erste Daten bei Verfügbarkeit an eine Einheit zu übertragen, die eine Anforderung für die ersten Daten ausgesendet hat;
ein Skalierungsmodul (303), das geeignet ist, eine Anzahl von Verarbeitungseinheiten zu bestimmen, die für eine Durchführung einer Menge der Verarbeitungen zuzuweisen sind, die in Anforderungen erster Daten beim Elementarmodul angefordert werden, wobei sich die Bestimmung der Anzahl auf ein Skalierungsmodell stützt, das der Verarbeitung vom vorgegebenen Typ entspricht, das von einem Modellierungsmodul (8) bereitgestellt wird, das im System enthalten ist; und,
ein Lastverteilungsmodul (302), das geeignet ist, für jede empfangene Anforderung wenigstens eine Verarbeitungseinheit aus Verarbeitungseinheiten auszuwählen, die vom Skalierungsmodul zugewiesen werden, um zweite Daten zu verarbeiten, um angeforderte erste Daten zu beziehen, und die Verarbeitung vom vorgegebenen Typ durch jede ausgewählte Verarbeitungseinheit startet, wobei sich die Auswahl der Verarbeitungseinheiten auf ein Lastverteilungsmodell stützt, das vom Modellierungsmodul (8) bereitgestellt wird;
wobei jedes Modell ein neuronales Netz vom Typ des tiefen Lernens ist, das vom Modellierungsmodul (8) im Verlauf des Betriebs des Systems anhand von Metriken trainiert wird, die von einem Modul zur Aggregation von Metriken (7) bezogen werden, das im System enthalten ist, wobei die Metriken von jedem Elementarmodul des Systems bereitgestellt werden, das die Verarbeitung vom vorgegebenen Typ ausführt, wobei die Metriken für einen Betrieb jedes Elementarmoduls des Systems repräsentativ sind, das die Verarbeitung vom vorgegebenen Typ ausführt.

2. Elementarmodul nach Anspruch 1, **dadurch gekennzeichnet, dass** jedes Modell ein hybrides neuronales Netz ist, wobei auf ein neuronales Netz vom Typ faltendes neuronales Netz, CNN-Neuronalnetz genannt, ein neuronales Netz mit langem Kurzzeitgedächtnis, LSTM-Neuronalnetz genannt, dann ein neuronales Netz vom Typ mehrlagiges Perzeptron, MLP-Neuronalnetz genannt, folgt.

3. System zur Verteilung von gespeicherten oder von Quellen direkt erzeugten audiovisuellen Inhalten an Anzeigeendgeräte, wobei jeder Inhalt von einem Endgerät in Form einer Folge aufeinanderfolgender Dateien empfangen wird, die Segmente genannt werden, wobei jedes Segment an ein Endgerät nach einer Übertragung einer Anfrage durch das Endgerät verteilt und durch eine Anwendung einer Verarbeitungskette auf einen Abschnitt eines Inhalts erhalten wird, **dadurch gekennzeichnet, dass**:
wenigstens eine Verarbeitungskette, die von dem Verteilungssystem eingesetzt wird, wenigstens ein Elementarmodul nach den Ansprüchen 1 oder 2 umfasst, das geeignet ist, eine Verarbeitung eines vorgegebenen Verarbeitungstyps durchzuführen,
und das System ferner Folgendes umfasst:
ein Modul zur Aggregation von Metriken (7), das dafür zuständig ist, regelmäßig Metriken von jedem der Elementarmodule des Systems zu beziehen und für jeden vorgegebenen Verarbeitungstyp die Metriken zu aggregieren, die von jedem Verarbeitungsmodul des Systems bezogen werden, das den vorgegebenen Verarbeitungstyp durchführt; und,
ein Modellierungsmodul (8), das die für jeden vorgegebenen Verarbeitungstyp spezifischen Metriken abruft, die vom Modul zur Aggregation von Metriken (7) bereitgestellt werden, und anhand dieser Metriken für jeden der Typen von vorgegebener Verarbeitung ein Skalierungsmodell und ein Lastverteilungsmodell, das für den vorgegebenen Verarbeitungstyp spezifisch ist, definiert.

4. System nach Anspruch 3, **dadurch gekennzeichnet, dass** das Definieren der Skalierungs- und Lastverteilungsmodelle durch Training asynchron bezogen auf den Betrieb jeder Verarbeitungskette durchgeführt wird, die wenigstens ein Elementarmodul umfasst, das vom System eingesetzt wird.

5. Verarbeitungsverfahren, das von einem Elementarmodul ausgeführt wird, das einen vorgegebenen Verarbeitungstyp in wenigstens einer Verarbeitungskette eines System zur Verteilung von gespeicherten oder von Quellen direkt erzeugten audiovisuellen Inhalten an Anzeigeendgeräte ausführt, wobei jede Verteilung von Inhalten in Form von Dateien erfolgt, die Segmente genannt werden, wobei jedes Segment, das an ein Endgerät verteilt wird, Gegenstand einer Anfrage war, die durch das Endgerät übertragen wird und aus einer Anwendung einer Verarbeitungskette auf einen Inhaltsabschnitt hervorgeht, der durch die Anfrage angefordert wird, **dadurch gekennzeichnet, dass** das Verfahren Folgendes umfasst:
Empfangen (700) wenigstens einer Anforderung erster Daten, wobei jede Anforderung eine Information, die für eine Verarbeitungskette repräsentativ ist, die auf einen Abschnitt eines Inhalts anzuwenden ist, der einem Segment entspricht, das in einer Anfrage durch ein Endgerät angefordert wird, um die ersten Daten zu beziehen, und eine Information, die für Konfigurationsparameter repräsentativ ist, die auf wenigstens eine Verarbeitungseinheit anzuwenden sind, um die ersten Daten zu erzeugen, umfasst;
für jede der Anforderungen, Extrahieren (702) der Information, die für die Konfigurationsparameter repräsentativ ist, die in der Anforderung enthalten sind, und (703, 704) Übertragen einer Anforderung zweiter Daten an eine Quelle oder eine Einheit, die dem Elementarmodul in der Verarbeitungskette vorangeht, die anhand der Information bestimmt wird, die für die Verarbeitungskette repräsentativ ist, wobei die zweiten Daten dem Abschnitt entsprechen, der von einer oder mehreren Einheiten, die dem Elementarmodul in der Verarbeitungskette vorangehen, verarbeitet wurde oder nicht;
Bestimmen (705) einer Anzahl zuzuweisender Verarbeitungseinheiten, um jede Verarbeitung auszuführen, die in jeder empfangenen Anforderung erster Daten angefordert wird, unter Nutzung eines Skalierungsmodells, das der Verarbeitung vom vorgegebenen Typ entspricht, das von einem Modellierungsmodul (8) bereitgestellt wird, das im System enthalten ist, wobei jede Verarbeitungseinheit zu einer Mehrzahl von Verarbeitungseinheiten gehört, die dafür verfügbar sind, die Verarbeitung vom vorgegebenen Typ auszuführen, wobei das Elementarmodul regelmäßig eine Information bezieht, die für jede Verarbeitungseinheit repräsentativ ist, die hinzugefügt oder von der Mehrzahl gelöscht wird, und Zuweisen oder Freigeben der verfügbaren Verarbeitungseinheiten unter Berücksichtigung einer Anzahl von verfügbaren, bereits zugewiesenen Verarbeitungseinheiten;
Auswählen (706) wenigstens einer Verarbeitungseinheit aus den zugewiesenen Verarbeitungseinheiten für jede Anforderung unter Nutzung eines Lastverteilungsmodells, das vom Modellierungsmodul bereitgestellt wird, und Aktivieren jeder ausgewählten Verarbeitungseinheit, damit sie bei Empfang der zweiten Daten den vorgegebenen Verarbeitungstyp auf die zweiten Daten anwendet, wobei jede Verarbeitungseinheit die Information berücksichtigt, die für die Konfigurationsparameter repräsentativ ist, die der Verarbeitung entsprechen, die sie ausführen soll,
wobei jedes Modell ein neuronales Netz vom Typ des tiefen Lernens ist, das vom Modellierungsmodul (8) im Verlauf des Betriebs des Systems anhand von Metriken trainiert wird, die von einem Modul zur Aggregation von Metriken (7) bezogen werden, das im System enthalten ist, wobei die Metriken von jedem Elementarmodul des Systems bereitgestellt werden, das die Verarbeitung vom vorgegebenen Typ ausführt, wobei die Metriken für einen Betrieb jedes Elementarmoduls des Systems repräsentativ sind, das die Verarbeitung vom vorgegebenen Typ ausführt; und,
für jede Anforderung, Übertragen (707) der ersten Daten bei Verfügbarkeit an eine Einheit, die die Anforderung für die ersten Daten ausgesendet hat; wobei jede Verarbeitungseinheit keine Information bezüglich einer Verarbeitung behält, sobald die Verarbeitung durchgeführt ist.

6. System nach Anspruch 5, **dadurch gekennzeichnet, dass** das Training der Skalierungs- und Lastverteilungsmodelle asynchron bezogen auf den Betrieb jeder Verarbeitungskette durchgeführt wird, die das Elementarmodul umfasst.

7. Verfahren nach Anspruch 5 oder 6, **dadurch gekennzeichnet, dass** das Training jedes Modells einen Satz von Merkmalen verwendet, der die Form eines Parameterverktors aufweist, wobei bestimmte Parameter selbst Vektoren sind.

8. Verfahren nach Anspruch 7, **dadurch gekennzeichnet, dass** der Satz von Merkmalen, der für das Training des Skalierungsmodells verwendet wird, Merkmale umfasst, mit denen Parameter des Modells angepasst werden können, um ein Ziel der Vermeidung einer Überlastung der zugewiesenen Verarbeitungseinheiten zu erreichen.

9. Computerprogrammprodukt, **dadurch gekennzeichnet, dass** es Anweisungen aufweist, um durch eine Vorrichtung das Verfahren nach Anspruch 5, 6, 7 oder 8 durch einen Prozessor der Vorrichtung durchzuführen.

10. Speichermittel, **dadurch gekennzeichnet, dass** sie ein Computerprogramm speichern, das Anweisungen aufweist, um durch eine Vorrichtung das Verfahren nach Anspruch 5, 6, 7 oder 8 durchzuführen, wenn das Programm von einem Prozessor der Vorrichtung ausgeführt wird.

## Claims

1. Elementary module intended to be used in at least one workflow of a system making it possible to distribute audiovisual contents stored or produced live by sources to display terminals, each content being received by a terminal in the form of a succession of consecutive files, referred to as segments, each segment being distributed to a terminal following a transmission of a request by said terminal and being obtained by an application of a workflow to a portion of a content, the elementary module executing a predefined type of processing of the workflow, **characterised in that** the elementary module comprises:
a variable plurality of processing units available for executing the processing of the predefined type, the elementary module regularly obtaining information representing each processing unit added or removed in the plurality, each processing unit not keeping any information concerning a processing once the processing has been performed;
a module, referred to as a central module, comprising a communication module able to receive requests for first data, each request comprising information representing a workflow to be applied to a portion of a content corresponding to a segment requested in a request by a terminal in order to obtain said first data and information representing configuration parameters to be applied to at least one processing unit of said elementary module in order to generate the first data, each processing unit taking into account the information representing the configuration parameters included in a request for first data for performing a processing corresponding to said request for first data; able to transmit a request for second data to a unit preceding the elementary module in the workflow determined from the information representing the workflow, said second data corresponding to said portion processed or not by one or more units preceding the elementary module in the workflow; and able to transmit first data when they are available to a unit that sent a request for said first data;
a scaling module (303), able to determine a number of processing units to be allocated for implementation of a set of processing operations requested of the elementary module in requests for first data, the determination of said number relying on a scaling model corresponding to the processing of the predefined type supplied by a modelling module (8) included in said system; and a load balancing module (302) able to choose, for each request received, at least one processing unit from among the processing units allocated by the scaling module for processing second data in order to obtain first data requested and launching the processing of the predefined type by each processing unit chosen, the choice of the processing units relying on a load balancing model supplied by said modelling module (8);
each model being a neural network of the deep learning type, trained by the modelling module (8) during the functioning of said system from metrics obtained by a metrics aggregation module (7) included in said system that were supplied by each elementary module of said system executing the processing of the predefined type, said metrics representing a functioning of each elementary module of said system executing the processing of the predefined type.

2. Elementary module according to claim 1, **characterised in that** each model is a hybrid neural network wherein a neural network of the convolutional neural network type, referred to as a CNN neural network, is followed by a neural network of the long short-term memory type, referred to as an LSTM neural network, and then a neural network of the multilayer perceptron type, referred to as an MLP neural network.

3. System for distributing audiovisual contents stored or produced live by sources to display terminals, each content being received by a terminal in the form of a succession of consecutive files, referred to a segment, each segment being distributed to a terminal following a transmission of a request by said terminal and being obtained by an application of a workflow to a portion of a content **characterised in that**
at least one workflow implemented by the distribution system comprises at least one elementary module according to claim 1 or 2 able to perform a processing of a predefined type of processing,
and said system further comprises:
a metrics aggregation module (7) responsible for regularly obtaining metrics of each of the elementary modules of said system and, for each predefined type of processing, aggregating the metrics obtained of each processing module of said system implementing said predefined processing type; and
a modelling module (8) recovering the metrics specific to each predefined type of processing supplied by the metrics aggregation module and, from these metrics, defining, for each of said predefined type of processing, a scaling model and a load balancing model specific to said predefined type of processing.

4. System according to claim 3, **characterised in that** the definition by training the scaling and load balancing models is performed asynchronously with respect to the functioning of each workflow comprising at least one elementary module used by said system.

5. Processing method executed by an elementary module executing a predefined type of processing in at least one workflow in a system for distributing audiovisual contents stored or produced live by sources to display terminals, each content distribution taking place in the form of files, referred to as segments, each segment distributed to a terminal having been the subject of a request transmitted by said terminal and resulting from an application of a workflow to a content portion asked for by the request **characterised in that** the method comprises:
receiving (700) at least one request for first data, each request comprising information representing a workflow to be applied to a portion of a content corresponding to a segment asked for in a request by a terminal in order to obtain said first data and information representing configuration parameters to be applied to at least one processing unit for generating the first data;
for each of said requests, extracting (702) the information representing the configuration parameters contained in said request and (703, 704) transmitting a request for second data to a source or to a unit preceding the elementary module in the workflow determined from the information representing the workflow, said second data corresponding to said portion processed or not by one or more units preceding the elementary module in the workflow;
determining (705) a number of processing units to be allocated for executing each processing asked for in each request for first data received using a scaling model corresponding to the processing of the predefined type supplied by a modelling module (8) included in said system, each processing unit belonging to a plurality of processing units available for executing the processing of the predefined type, the elementary module regularly obtaining information representing each processing unit added to or removed from said plurality, and allocating or deallocating available processing units by taking into account a number of processing units already allocated available;
choosing (706), for each request, at least one processing unit among the processing units allocated using a load balancing model supplied by the modelling module and activating each processing unit chosen so that it applies the predefined type of processing on the second data on reception of the second data, each processing unit taking into account the information representing the configuration parameters corresponding to the processing that it must execute,
each model being a neural network of the deep learning type, trained by the modelling module (8) during the functioning of said system from metrics obtained by a metrics aggregation module (7) included in said system that were supplied by each elementary module of said system executing the processing of the predefined type, said metrics representing a functioning of each elementary module of said system executing the processing of the predefined type; and,
for each request, transmitting (707) the first data when they are available to a unit that sent the request for said first data; each processing unit not keeping any information concerning a processing once the processing has been performed.

6. Method according to claim 5, **characterised in that** the training of the scaling and load balancing models is performed asynchronously with respect to the functioning of each workflow comprising the elementary module.

7. Method according to claim 5 or 6, **characterised in that** the training of each model uses a set of characteristics taking the form of a parameter vector, some parameters being themselves vectors.

8. Method according to claim 7, **characterised in that** the set of characteristics used for the training of the scaling model comprises characteristics making it possible to adjust parameters of said model in order to achieve an objective of avoiding overload of the processing units allocated.

9. Computer program product, **characterised in that** it comprises instructions for implementing, by a device, the method according to claim 5, 6, 7 or 8 by a processor of the device.

10. Storage means, **characterised in that** they store a computer program comprising instructions for implementing, by a device, the method according to claim 5, 6, 7 or 8 when said program is executed by a processor of said device.
